# EUROPÄISCHE PATENTANMELDUNG

(11) **EP 3 168 799 A1**
(43) Veröffentlichungstag der Anmeldung: **17.05.2017**
(21) Anmeldenummer: 15194069.9
(22) Anmeldetag: 11.11.2015
(51) Int. Cl.: G06Q 10/08

(54) **KOMMISSIONIERVERFAHREN**

(71) Anmelder: Berlinger System Engineering GmbH, 9020 Klagenfurt (AT)
(72) Erfinder: Hüpfl, Claudia, 9020 Klagenfurt (AT); Kassl, Alexander, 9020 Klagenfurt (AT); Mätzler, Gunar, 9020 Klagenfurt (AT); Steiner, Michael, 9065 Ebenthal (AT); Zannella, Petra, 9500 Villach (AT)
(74) Vertreter: Schwarz & Partner Patentanwälte OG

(57) **Zusammenfassung**

Die Erfindung betrifft ein Verfahren (1) zum manuellen Kommissionieren von Produkten (P1-P6) in einem Kommissionierbereich (10), umfassend die folgenden Verfahrensschritte:
- a - Erfassen der Bestelldaten sämtlicher Produkte (P2, P5, P6) eines ersten Kommissionierauftrags (K1) in einem Zentralrechner (100);
- b - Maschinelles Identifizieren zumindest eines bestellten Produkts (P2, P5, P6) des ersten Kommissionierauftrags (K1) an einem Entnahmeplatz (E2, E17, E19) innerhalb des Kommissionierbereichs (10) durch die Bildaufnahmeeinheit (130);
- c - Visuelles Markieren zumindest eines bestellten Produkts (P2, P5, P6) durch optische Projektion der Kommissionierauftragskennung (S1) des ersten Kommissionierauftrags (K1) auf die Oberfläche des bestellten Produkts (P2, P5, P6) durch die Projektionseinheit (120);
- e - Ablegen oder Einpacken des zumindest einen bestellten Produkts (P2, P5, P6) in zumindest ein Kommissionierzielgebinde (Z1) durch zumindest eine Kommissionierperson (M1, M2);
- f - erforderlichenfalls Wiederholen der Verfahrensschritte - b - bis - e - für weitere bestellte Produkte (P2, P5, P6).

## Beschreibung

Die Erfindung betrifft ein Kommissionierverfahren zum manuellen Kommissionieren von Produkten in einem Kommissionierbereich, insbesondere von Speise- und Getränkeprodukten in einem Produktionsbereich eines Restaurants, gemäß einem Kommissionierauftrag, sowie einen Arbeitsplatz zum manuellen Kommissionieren von Produkten.

Weltweit werden insbesondere von Gastronomiekonzernen sogenannte "Drive-in" Schnellrestaurants betrieben, bei denen Dienstleistungen angeboten werden, ohne dass der Kunde hierfür sein Auto verlassen muss. Der im deutschen Sprachraum meist verwendete Begriff "Drive-in" ist eigentlich ungenau, da man beim Besuch eines solchen Schnellrestaurants nicht "in" das Restaurant fährt, sondern eigentlich "durch" dieses hindurch. Im englischen Sprachraum lautet der entsprechende Begriff daher auch "Drivethrough" beziehungsweise verkürzt geschrieben "Drive-Thru". Wie allgemein bekannt, bestellen, bezahlen und übernehmen bei diesen "Drive-Thru"-Schnellrestaurants die Kunden von ihrem Fahrzeug aus entlang einer Zufahrtsgasse die bestellte Ware.

Die vollständige Abwicklung von der Bestellung bis zur Übergabe der Waren erfolgt dabei je nach Fahrzeugfrequenz durch eine einzelne Person oder durch ein Team von mehreren Personen. Aus dem Stand der Technik ist derzeit bekannt, dass in "Drive-Thru"-Schnellrestaurants die Bestellungen von Mitarbeitern mit Hilfe eines Computersystems übernommen beziehungsweise boniert werden und die Bestellungen auf Bildschirmen im Produktionsbereich angezeigt werden. Üblicherweise kommissionieren anschließend andere Mitarbeiter diese Bestellungen ohne weitere maschinelle Unterstützung. Dabei werden die bestellten Produkte anhand von den auf Bildschirmen angezeigten Bestellaufträgen manuell aus einer laufenden Speisenproduktion übernommen sowie die entsprechenden bestellten Getränke in Getränkebecher befüllt von einem Getränkeautomaten übernommen und die pro Auftrag eingesammelten Produkte in entsprechende Gebinde verpackt. Als Gebinde werden üblicherweise Papiersäcke und/oder sogenannte Trays, also vorgeformte Getränkehalterungen, in welche die Produkte beziehungsweise Getränkebecher eingesteckt werden können, verwendet. Die Kommissionierung der bestellten Produkte erfolgt durch ständiges beziehungsweise wiederholtes Ablesen der Bestellung von den Bildschirmen, durch Identifizieren, Memorisieren sowie gegebenenfalls Verpacken der jeweiligen Produkte. Wenn die Bestellung nach Meinung des Mitarbeiters vollständig abgearbeitet ist, werden die Gebinde mit der fertig zusammengestellten Bestellung an die in ihrem Fahrzeug wartenden Kunden übergeben. Nach erfolgter Auslieferung der Bestellung wird diese meist durch Tastendruck quittiert und verschwindet somit von den Bildschirmanzeigen im Produktionsbereich des Restaurants.

Bei hoher Fahrzeugfrequenz werden erforderlichenfalls auch zwei oder mehrere Bestellungen von den Restaurantmitarbeitern gleichzeitig bearbeitet. Zusätzlich wird die Kommissionierung der Bestellungen dadurch erschwert, dass diese meist nicht rein sequentiell abgearbeitet werden können, da nicht sämtliche bestellten Produkte zeitgleich beziehungsweise rechtzeitig bereitstehen und daher einzelne Bestellpositionen erforderlichenfalls vorerst übersprungen werden müssen, bis die entsprechenden Produkte schlussendlich bereitgestellt sind.

Diese Bedingungen, insbesondere mehrere parallele Bestellaufträge gleichzeitig beziehungsweise im Team gemeinsam abzuarbeiten, schaffen jedoch ein erhebliches Fehlerpotential, sodass versehentlich falsch zugeordnete Produkte in die Gebinde einer anderen Bestellung verpackt oder aber für einen Auftrag bestellte und vom Kunden bezahlte Produkte übersehen beziehungsweise vergessen werden und diese Produkte an den Kunden somit nicht ausgeliefert werden. Da die in ihrem Fahrzeug wartenden Kunden aufgrund ihrer externen Position außerhalb des Restaurants keine sofortige Kontrollmöglichkeit der erhaltenen Lieferung haben und üblicherweise nicht jede Einzelposition der in den Gebinden tatsächlich befindlichen Produkte überprüfen, werden Fehler meist erst dann bemerkt, wenn es bereits zu spät ist und sich die Kunden nicht mehr in der Nähe des Restaurants aufhalten. Derartige Fehler beim Abarbeiten der Bestellaufträge führen - vom Restaurantbetreiber meist unbemerkt - jedenfalls zur Enttäuschung der Kunden und in weiterer Folge zu einem Imageschaden des Restaurantbetreibers.

Auch für den Restaurantbetreiber ist das derzeitige, fehleranfällige System nachteilig, da durch falsch verpackte Waren ein nicht vorhersehbarer Warenschwund auftritt, weshalb es durch die damit einhergehenden Abweichungen des Lagerbestands sowie durch Fehler in der Produktionsvorbereitung zu wirtschaftlichen Verlusten des Restaurantbetreibers kommt. Diese wirtschaftlichen Verluste werden durch den Imageschaden aufgrund von fehlerhaften Warenlieferungen noch weiter verstärkt, weshalb Gastronomiekonzerne als Betreiber beziehungsweise als Franchisegeber solcher "Drive-Thru"-Schnellrestaurants erhöhte Ausgaben für Qualitätssicherungsmaßnahmen sowie Maßnahmen zur Kundenbindung zu tragen haben.

Ebenso sind unterschiedlichste Take-away Verfahren bekannt, bei denen Kunden zu Fuß beziehungsweise ohne eigenes Fahrzeug beispielsweise zu einem Kaffeehaus, einem Restaurant oder einem vergleichbaren Dienstleitungsunternehmen kommen, um dort Waren zu bestellen und diese zu übernehmen oder um bereits vorbestellte Waren abzuholen. Die Nachteile einer mangelnden Kontrollmöglichkeit der erhaltenen Lieferung durch den Kunden bleiben auch bei solchen Take-away Verfahren bestehen.

Es ist somit die Aufgabe der vorliegenden Erfindung ein Kommissionierverfahren bereitzustellen, das die geschilderten Nachteile des Standes der Technik vermeidet, und bei dem die einzelnen Tätigkeiten in Zusammenhang mit dem Kommissionieren und Verpacken der bestellten Produkte maschinell geführt und überwacht werden, um falsche Kommissionierungsvorgänge möglichst zu verhindern beziehungsweise zu erkennen.

Diese Aufgabe wird bei einem Kommissionierverfahren gemäß dem Oberbegriff des Anspruchs 1 mit den Merkmalen des kennzeichnenden Teiles des Anspruchs 1 gelöst. Die Unteransprüche betreffen weitere besonders vorteilhafte Ausgestaltungen der Erfindung.

Ein erfindungsgemäßes Verfahren zum manuellen Kommissionieren von Produkten in einem Kommissionierbereich, insbesondere von Speise- und Getränkeprodukten in einem Produktionsbereich eines Restaurants, gemäß einem Kommissionierauftrag, umfasst die folgenden Verfahrensschritte:
- a - Erfassen von Bestelldaten sämtlicher bestellter Produkte eines ersten Kommissionierauftrags im Zentralrechner;
- b - Maschinelles Identifizieren zumindest eines bestellten Produkts des ersten Kommissionierauftrags an einem Entnahmeplatz innerhalb des Kommissionierbereichs durch eine Bildaufnahmeeinheit, gegebenenfalls gemeinsam mit dem Zentralrechner anhand von Produktdaten und den Bestelldaten des Zentralrechners oder von Standortdaten des Entnahmeplatzes;
- c - Visuelles Markieren zumindest eines bestellten Produkts durch optische Projektion einer Kommissionierauftragskennung des ersten Kommissionierauftrags auf eine Oberfläche des bestellten Produkts durch eine Projektionseinheit;
- e - Ablegen oder Einpacken des zumindest einen bestellten Produkts in zumindest ein Kommissionierzielgebinde durch zumindest eine Kommissionierperson;
- f - erforderlichenfalls Wiederholen der Verfahrensschritte - b - bis - e - für weitere bestellte Produkte des ersten Kommissionierauftrags.

Hierdurch ist der Vorteil erhalten, dass während des Kommissionierens von Produkten die Fehlerrate reduziert und der Durchsatz erhöht werden, wobei die Belastung der Mitarbeiter sowie der Schulungsaufwand reduziert werden.

Vorteilhafterweise kann der Zentralrechner direkt mit der Projektionseinheit und der Bildaufnahmeeinheit gekoppelt sein, welche Projektionseinheit und Bildaufnahmeeinheit vom Zentralrechner gesteuert werden. Die Projektionseinheit und die Bildaufnahmeeinheit sind dabei jeweils ortsfest stationär innerhalb des Kommissionierbereichs positioniert. Die Projektionseinheit ist vorzugsweise als stationärer Wand- oder Deckenprojektor und die Bildaufnahmeeinheit ist vorzugsweise als stationäre Videokamera ausgeführt. Dies ermöglicht eine von den Kommissionierpersonen beziehungsweise den Datenverarbeitungseinheiten unabhängige maschinelle Identifikation und visuelle Markierung der Daten und/oder der Produkte und/oder der Kommissionierzielgebinde ohne den Einsatz gegebenenfalls technisch aufwändiger und/oder kostspieliger Datenverarbeitungseinheiten.

In einer weiteren Ausführungsform der Erfindung kann zumindest eine Kommissionierperson mit einer tragbaren Datenverarbeitungseinheit ausgerüstet werden, die am Körper der Kommissionierperson getragen wird. Eine tragbare Datenverarbeitungseinheit, die während einer Anwendung am Körper des Benutzers befestigt ist, unterscheidet sich von der Verwendung anderer mobiler Computersysteme dadurch, dass die hauptsächliche Tätigkeit des Benutzers nicht die Benutzung des Computers selbst, sondern eine durch den tragbaren Computer beziehungsweise durch die tragbare Datenverarbeitungseinheit unterstützte Tätigkeit in der realen Welt ist.

Hier werden vorteilhaft von der tragbaren Datenverarbeitungseinheit sämtliche Tätigkeiten in Zusammenhang mit dem Kommissionieren bestellter Produkte eines Kommissionierauftrags unterstützt. Dazu werden zuerst die Bestelldaten sämtlicher Produkte eines ersten Kommissionierauftrags in einem Zentralrechner erfasst. Die Bestelldaten des ersten Kommissionierauftrags werden anschließend vom Zentralrechner an die zumindest eine Datenverarbeitungseinheit übertragen. Vorteilhaft sind beispielsweise in einem "Drive-Thru"-Schnellrestaurant oder einem Take-away-Dienstleistungsunternehmen sämtliche im Produktionsbereich tätige Mitarbeiter als Kommissionierpersonen jeweils mit einer tragbaren Datenverarbeitungseinheit ausgerüstet.

Weiters erfolgt die Zuordnung einer eindeutigen Kommissionierauftragskennung zu den bestellten Produkten des ersten Kommissionierauftrags anhand der Bestelldaten des Zentralrechners. Anschließend werden die bestellten Produkte des ersten Kommissionierauftrags durch maschinelles Identifizieren mittels der Datenverarbeitungseinheit oder einer Bildaufnahmeeinheit an ihrem jeweiligen Entnahmeplatz innerhalb des Kommissionierbereichs anhand von voreingestellten Produktdaten und/oder von Standortdaten des Entnahmeplatzes und/oder von Bestelldaten des Zentralrechners erfasst beziehungsweise identifiziert. Als Produktdaten zur maschinellen Identifikation dienen beispielsweise Form, Farbe, Musterung, Struktur, Größe, Gewicht und/oder Strichcodes einer Produktverpackung, mit der das bestellte Produkt beziehungsweise mehrere bestellte Produkte verpackt ist beziehungsweise sind. Durch entsprechende Abfrage der Produktdaten beziehungsweise durch Vergleich mit den Produktdaten und/oder Standortdaten und/oder Bestelldaten werden die Produkte an ihrem jeweiligen Entnahmeplatz maschinell identifiziert. Das Identifizieren der bestellten Produkte kann dabei mittels der Bildaufnahmeeinheit, gegebenenfalls gemeinsam mit dem Zentralrechner, vollständig durch die tragbare Datenverarbeitungseinheit oder verteilt über eine tragbare Datenverarbeitungseinheit gemeinsam mit der Bildaufnahmeeinheit und/oder dem Zentralrechner erfolgen. Das maschinelle Identifizieren kann durch die tragbare Datenverarbeitungseinheit sowohl optisch durch Bilderkennung oder beispielsweise auch durch kontaktlose Identifikation eines RFID ICs in der Produktverpackung erfolgen.

Dabei wird zumindest ein bestelltes Produkt mittels Überlagerung mit der Kommissionierauftragskennung des ersten Kommissionierauftrags durch die Datenverarbeitungseinheit oder eine Projektionseinheit visuell markiert. Weiters wird zumindest ein dem ersten Kommissionierauftrag zugewiesenes Kommissionierzielgebinde, in dem das zumindest eine visuell markierte, bestellte Produkt von der zumindest einen Kommissionierperson abzulegen ist, mit derselben eindeutigen Kommissionierauftragskennung des ersten Kommissionierauftrags durch die Datenverarbeitungseinheit oder die Projektionseinheit und/oder durch eine mit dem Zentralrechner gekoppelte Markierungsvorrichtung visuell markiert. Je nach Anwendungsfall beziehungsweise je nach technischer Ausstattung können im Rahmen eines erfindungsgemäßen Kommissionierverfahrens die Kommissionierzielgebinde beispielsweise auf eine oder mehrere der folgenden Arten visuell markiert werden:
- durch die Datenverarbeitungseinheit oder die Projektionseinheit, in dem von der Datenverarbeitungseinheit ein Kommissionierzielgebinde mit der Kommissionierauftragskennung des entsprechenden Kommissionierauftrags überlagert wird;
- durch eine Markierungsvorrichtung, beispielsweise einen Drucker oder ein Etikettiergerät, mit dem die eindeutige Kommissionierauftragskennung auf das einem Kommissionierauftrag zugeordnete Kommissionierzielgebinde aufgedruckt beziehungsweise aufgeklebt wird;
- durch manuelles Aufbringen der entsprechenden Kommissionierauftragskennung, beispielsweise durch Aufkleben eines Etiketts mit der eindeutigen Kommissionierauftragskennung, durch eine Kommissionierperson.

Als Kommissionierzielgebinde können je nach Anwendungsfall beispielsweise Tragtaschen, Säcke, Getränkehalterungen beziehungsweise Trays, Kleinteileboxen, Tabletts und/oder vergleichbare Gebinde dienen, in welche die bestellten Produkte eines Kommissionierauftrags kommissioniert werden. Die Kommissionierzielgebinde können im Rahmen der Erfindung beispielsweise während des Abarbeitens eines Kommissionierauftrags an vordefinierten Stellplätzen innerhalb des Kommissionierbereichs aufgestellt werden, wodurch mehrere Kommissionierpersonen zeitgleich im Team bestellte Produkte in den Kommissionierzielgebinden ablegen können. Alternativ oder in Ergänzung dazu können die Kommissionierzielgebinde während des Abarbeitens eines Kommissionierauftrags ebenso von einer oder mehreren Kommissionierpersonen innerhalb des Kommissionierbereichs mitgenommen beziehungsweise mitgetragen werden, um darin die bestellten Produkte auf kurzem Wege an den Entnahmestellen einzusammeln.

Das Ablegen des zumindest einen bestellten Produkts in dem zugewiesenen Kommissionierzielgebinde erfolgt dann durch die zumindest eine Kommissionierperson.

Vorteilhaft können die jeweils für einen Kommissionierauftrag relevanten Daten von einem Zentralrechner aus auch an mehrere tragbare Datenverarbeitungseinheiten, die jeweils von im Team arbeitenden Kommissionierpersonen getragen werden, besonders einfach und rasch übermittelt werden. Die Kommissionierpersonen werden anschließend innerhalb des Kommissionierbereichs von ihren Datenverarbeitungseinheiten mittels visueller Markierungen entsprechend geführt, wobei einerseits von den Datenverarbeitungseinheiten bestellte Produkte an ihren Entnahmeplätzen eindeutig identifiziert werden. Andrerseits wird auch ein Kommissionierzielgebinde, das einem bestimmten Kommissionierauftrag zugewiesen ist und in dem die identifizierten Produkte dieses Kommissionierauftrags abzulegen sind, durch zumindest eine der vorgenannten Varianten, beispielsweise durch die Datenverarbeitungseinheit und/oder durch eine mit dem Zentralrechner gekoppelte Markierungseinheit, visuell markiert. Zur visuellen Markierung dient jeweils eine für den jeweiligen Kommissionierauftrag eindeutige Kommissionierauftragskennung, die je nach technischer Ausstattung beispielsweise durch visuelle Überlagerung auf das Kommissionierzielgebinde projiziert, aufgedruckt und/oder aufgeklebt wird. Somit wird zuverlässig gewährleistet, dass irrtümlich falsche Zuordnungen von nicht bestellten Produkten zu einem Kommissionierauftrag vermieden werden.

Zweckmäßig werden bei einem erfindungsgemäßen Verfahren die Bestelldaten der bestellten Produkte durch die zumindest eine tragbare Datenverarbeitungseinheit und/oder den Zentralrechner überprüft, wobei
- im Falle einer richtigen Zuordnung und Ablage zumindest eines ersten bestellten Produkts im zugewiesenen Kommissionierzielgebinde erforderlichenfalls die Verfahrensschritte des maschinellen Identifizierens weiterer bestellter Produkte eines Kommissionierauftrags, des visuellen Markierens weiterer bestellter Produkte, des visuellen Markierens eines dem jeweiligen Kommissionierauftrag zugewiesenen Kommissionierzielgebindes sowie des Ablegens der weiteren bestellten Produkte im zugewiesenen Kommissionierzielgebinde durch eine Kommissionierperson entsprechend wiederholt werden,
   oder
- im Falle einer falschen Zuordnung und/oder falschen Ablage eines bestellten Produkts in einem falschen Kommissionierzielgebinde eine Fehlermeldung an die zumindest eine Datenverarbeitungseinheit gesendet wird und/oder eine visuelle Markierung des falsch zugeordneten Produkts und/oder des falschen Kommissionierzielgebindes durch die Datenverarbeitungseinheit und/oder die Projektionseinheit und/oder die mit dem Zentralrechner gekoppelte Anzeigeeinheit erfolgt.

Vorteilhaft erfolgt im Rahmen eines erfindungsgemäßen Kommissionierverfahrens eine entsprechende Überprüfung der Bestelldaten der bestellten Produkte.

Besonders vorteilhaft ist bei einem erfindungsgemäßen Kommissionierverfahren, dass
- nach erfolgtem Ablegen sämtlicher bestellter Produkte eines Kommissionierauftrags im zugewiesenen Kommissionierzielgebinde der fertig abgearbeitete Kommissionierauftrag durch die tragbare Datenverarbeitungseinheit und/oder die mit dem Zentralrechner gekoppelte Anzeigeeinheit und/oder durch die Projektionseinheit (beispielsweise auf eine ausgewiesene Fläche innerhalb des Kommissionierbereichs) angezeigt wird, worauf
- die im zugewiesenen Kommissionierzielgebinde gesammelten Produkte ausgegeben werden, und
- gegebenenfalls der abgeschlossene Kommissionierauftrag quittiert wird.

In einer weiteren vorteilhaften Ausführung der Erfindung werden bei einem Kommissionierverfahren mehrere Kommissionieraufträge zumindest teilweise parallel von zumindest einer Kommissionierperson bearbeitet. Vorteilhaft können im Rahmen des erfindungsgemäßen Kommissionierverfahrens mehrere Kommissionieraufträge parallel von einer Kommissionierperson beziehungsweise von mehreren Kommissionierpersonen im Team bearbeitet werden, ohne dass es zu Verwechslungen der je Kommissionierauftrag bestellten Produkte kommt. Jedem Kommissionierauftrag wird dazu eine eindeutige Kommissionierauftragskennung zugeordnet, welche Kommissionierauftragskennung sowohl zur eindeutigen visuellen Markierung der jeweils bestellten Produkte dient, als auch zur visuellen Markierung des dem einen Kommissionierauftrag zugeordneten Kommissionierzielgebindes dient. Somit können von einer oder auch von mehreren Kommissionierpersonen Produkte innerhalb des Kommissionierbereichs, welche von der tragbaren Datenverarbeitungseinheit und/oder dem Zentralrechner identifiziert und durch die Projektionseinheit oder die tragbare Datenverarbeitungseinheit mit einer visuellen Markierung versehen werden, jeweils ohne Verwechslungen einem bestimmten Kommissionierauftrag zugeordnet werden. Die markierten Produkte werden dazu entsprechend an ihrem Entnahmeplatz entnommen und in dem jeweiligen Kommissionierzielgebinde, welches demselben Kommissionierauftrag zugeordnet ist und ebenfalls eindeutig mit der entsprechenden Kommissionierauftragskennung markiert ist, ohne Verwechslungen abgelegt.

Zweckmäßig werden bei einem erfindungsgemäßen Kommissionierverfahren von der tragbaren Datenverarbeitungseinheit und/oder der Projektionseinheit neben der Kommissionierauftragskennung zusätzliche Navigationsinformationen zum jeweils identifizierten, bestellten Produkt wie beispielsweise Informationen zur Priorität des jeweiligen Kommissionierauftrags, zur Packordnung des bestellten Produkts und/oder zur kürzesten Entfernung zum jeweiligen Entnahmeplatz eines bestellten Produkts und/oder zur kürzesten Entfernung zu dem einem bestimmten Kommissionierauftrag entsprechend zugeordneten Kommissionierzielgebinde, angezeigt. In dieser vorteilhaften Ausführung können beliebige weitere Navigationsinformationen zu einem oder zu mehreren Kommissionieraufträgen beziehungsweise zu den entsprechenden bestellten Produkten von der tragbaren Datenverarbeitungseinheit und/oder der Projektionseinheit angezeigt werden. Beispielsweise ist es im Rahmen der Erfindung möglich, dass ein Kommissionierauftrag mit hoher Priorität besonders auffällig gekennzeichnet wird, indem beispielsweise die visuelle Kennzeichnung der entsprechenden bestellten Produkte mit der eindeutigen Kommissionierauftragserkennung jeweils Blinklichtsignale mitumfasst.

In einer bevorzugten Ausführung der Erfindung wird bei einem Kommissionierverfahren von einer Kommissionierperson als tragbare Datenverarbeitungseinheit eine Datenbrille getragen, wobei von der Datenbrille jeweils eine Kommissionierauftragskennung sowie gegebenenfalls zusätzliche Navigationsinformationen zu den bestellten Produkten in ein Sichtfeld der Kommissionierperson projiziert wird beziehungsweise werden. Eine an sich bekannte Datenbrille, die als tragbare Datenverarbeitungseinheit jeweils von den Kommissionierpersonen getragen wird, bietet den Vorteil, dass in ein Sichtfeld der Datenbrille erforderlichenfalls zahlreiche individuelle Navigationsinformationen eingeblendet werden können, welche jeweils nur von derjenigen Kommissionierperson wahrgenommen werden, welche eine entsprechende Datenbrille trägt. Mögliche Verwechslungen der visuellen Markierungen an bestellten Produkten beziehungsweise an Kommissionierzielgebinden, welche von mehreren Kommissionierpersonen gesehen werden können, werden durch den Einsatz von Datenbrillen zuverlässig vermieden. Weiters haben Datenbrillen den Vorteil, robust zu sein und auch bei längerer Tragedauer den Träger bei seiner Arbeit weder zu behindern, noch zu gefährden.

Zusätzlich zu den tragbaren Datenverarbeitungseinheiten können je nach Bedarf von den Kommissionierpersonen weitere Kommunikations- oder Datenverarbeitungsmittel am Körper getragen werden. So ist es im Rahmen der Erfindung vorgesehen, dass beispielsweise die Kommissionierpersonen sowohl jeweils eine Datenbrille tragen, in deren Gesichtsfeld die entsprechenden visuellen Kommissionierauftragskennungen sowie gegebenenfalls weitere Navigationsinformationen eingeblendet werden, als auch zusätzlich noch eine tragbare Funk-Wechselsprecheinrichtung mit Kopfhörer und Mikrofon, ein sogenanntes Head-Set, tragen, um miteinander kommunizieren zu können beziehungsweise um mittels der Wechselsprecheinrichtung auch akustische Anweisungen zu erhalten.

Zweckmäßig wird bei einem erfindungsgemäßen Kommissionierverfahren von der Datenbrille ein identifiziertes, bestelltes Produkt durch Überlagerung mit der Kommissionierauftragskennung des entsprechenden Kommissionierauftrags markiert.

In einer Weiterbildung der Erfindung wird beziehungsweise werden bei einem Kommissionierverfahren von einer Kommissionierperson als tragbare Datenverarbeitungseinheit ein mobiles Computerendgerät, beispielsweise ein Tablet-Computer und/oder ein Smartphone, getragen, wobei vom mobilen Computerendgerät ein bestelltes Produkt anhand eines Bildausschnitts identifiziert und mit einer Kommissionierauftragserkennung markiert wird. Anstelle von Datenbrillen oder in Ergänzung dazu können auch Tablet-Computer und/oder Smartphones als tragbare Datenverarbeitungseinheiten dienen.

Vorteilhaft erfolgt bei einem Kommissionierverfahren gemäß der Erfindung eine Datenübertragung zwischen dem Zentralrechner und der zumindest einen tragbaren Datenverarbeitungseinheit kabellos. Diese Ausführung mit einer kabellosen Datenübertragung hat den Vorteil, dass das erfindungsgemäße Kommissionierverfahren ohne Umbauarbeiten auch in bereits bestehenden "Drive-Thru"-Restaurants jederzeit eingesetzt werden kann. Durch beispielsweise mittels Funkübertragung in einem Funknetzwerk kabellos übertragene Signale ist eine rasche und zuverlässige Datenübertragung zwischen dem Zentralrechner und den tragbaren Datenverarbeitungseinheiten gewährleistet.

In einer besonders zweckmäßigen Ausführung der Erfindung umfasst ein erfindungsgemäßes Kommissionierverfahren weiterhin zumindest eine Handerkennungseinrichtung, insbesondere zwei Handerkennungseinrichtungen, die an den Handgelenken zumindest einer Kommissionierperson befestigt ist beziehungsweise sind, wobei beim Ergreifen eines einem Kommissionierauftrag zugeordneten, visuell markierten bestellten Produkts am entsprechenden Entnahmeplatz durch eine Kommissionierperson von einer Lageerkennungseinrichtung, welche mit dem Zentralrechner gekoppelt ist, die Lage der zumindest einen Handerkennungseinrichtung an den Handgelenken der Kommissionierperson relativ zum Entnahmeplatz des entnommenen Produkts erkannt wird und/oder beim Ablegen des Produkts in dem entsprechend zugewiesenen Kommissionierzielgebinde anhand der Lage der zumindest einen Handerkennungseinrichtung relativ zum Kommissionierzielgebinde eine Überprüfung des Kommissionierzielgebindes jedes bestellten Produkts ermöglicht wird.

Zusätzlich oder alternativ zur Handerkennung mit Handerkennungseinrichtungen kann bei einem erfindungsgemäßen Kommissionierverfahren die Handerkennung auch mittels eines Bildverarbeitungsverfahrens durchgeführt werden. Die Handerkennung mittels Bildverarbeitung kommt dabei vorzugsweise ohne zusätzliche Hardware aus. Somit stellt die Handerkennung und damit die Erkennung des Einpackvorganges jedenfalls eine wichtige Option eines erfindungsgemäßen Kommissionierverfahrens dar.

In einer zweckmäßigen Weiterbildung der Erfindung umfasst bei einem Kommissionierverfahren jede Handerkennungseinrichtung ein Sender-/Empfänger-System mit einem mobilen Datenspeicher, welcher mobile Datenspeicher mittels einer Funkverbindung berührungslos ausgelesen wird. Vorzugsweise basieren die Handerkennungseinrichtungen an den Handgelenken der Kommissionierperson auf einer RFID-Technologie. Die RFID (kurz für "Radio-Frequency IDentification") ist eine Technologie zur automatischen und berührungslosen Identifikation von Objekten mittels Sender-/Empfänger-Systemen, welche in den letzten Jahren eine große Verbreitung in zahlreichen Anwendungsgebieten gefunden hat. Es handelt sich hierbei um eine kontaktlose Kommunikationstechnik, bei der Informationen zur Identifikation beispielsweise von Gegenständen oder Lebewesen von einem Datenträger (Transponder oder TAG genannt) an ein Schreib- beziehungsweise Lesegerät mit einer Antenne übertragen werden. Bringt man einen Transponder in die Reichweite dieser Antenne, kann man Informationen berührungslos vom Speicher des Transponders lesen oder auch Daten darauf abspeichern. Die Kopplung geschieht durch vom Schreib- beziehungsweise Lesegerät erzeugte magnetische Wechselfelder geringer Reichweite oder durch hochfrequente Radiowellen. Damit werden nicht nur Daten übertragen, sondern auch der passive Transponder mit Energie versorgt.

In einer bevorzugten Verfahrensvariante werden bei einem erfindungsgemäßen Kommissionierverfahren zum maschinellen Identifizieren eines bestellten Produkts an einem vordefinierten Entnahmeplatz Produktdaten wie Form und/oder Farbe und/oder Muster und/oder Strichcodes einer Produktverpackung ermittelt und/oder zum maschinellen Identifizieren eines bestellten Produkts an einem belegungsabhängigen Entnahmeplatz, beispielsweise an einem Getränkeausgabeautomaten, die Produktdaten unterschiedlicher Produkte anhand der Bestelldaten des Zentralrechners ermittelt. Ebenso können beispielsweise die äußeren Abmessungen einer Produktverpackung, ihr Gewicht und/oder eine Stückzahl von Produkten, welche sich in der Produktverpackung befindet, als Produktdaten zur maschinellen Identifikation von bestellten Produkten dienen. Somit ist es im Rahmen des erfindungsgemäßen Kommissionierverfahrens möglich, unterschiedliche Produkte an vordefinierten Entnahmeplätzen eindeutig maschinell zu identifizieren. Weiters können auch unterschiedliche Produkte, welche immer an demselben Entnahmeplatz anfallen, beispielsweise Getränkebecher mit jeweils individuellem Getränkeinhalt, welche an ein und demselben Abfüllplatz eines Getränkeautomaten befüllt werden, im Rahmen des erfindungsgemäßen Kommissionierverfahrens eindeutig erkannt und einem bestimmten Kommissionierauftrag zugeordnet werden.

Zweckmäßig enthält bei einem erfindungsgemäßen Kommissionierverfahren eine für ein bestelltes Produkt eindeutige Kommissionierauftragskennung zumindest eines der folgenden charakteristischen Kennzeichen enthält:
- Farbe,
- Form,
- Kontur,
- Strichcode,
- QR-Code.

Je nach Anforderung können unterschiedliche Kennzeichen beziehungsweise unterschiedliche graphische Merkmale, die sich in ihrer Farbe, ihrer Form, ihrer Kontur und/oder durch maschinenlesbare Bestandteile wie beispielsweise durch Strichcodes unterscheiden, als eindeutige Kommissionierauftragskennungen dienen. Ebenso ist es im Rahmen der Erfindung möglich, dass für eine eindeutige Kommissionierauftragskennung auch mehrere unterschiedliche charakteristische Kennzeichen beziehungsweise Merkmale miteinander kombiniert sind. So ist es beispielsweise möglich, eindeutige, verwechslungssichere Kommissionierauftragskennungen zu verwenden, die sich sowohl in der Farbwahl, als auch in der Wahl ihrer Form beziehungsweise Kontur voneinander unterscheiden. Vorzugsweise erfolgt die Auswahl beziehungsweise Erstellung der eindeutigen Kommissionierauftragskennungen durch Berechnung vom Zentralrechner aus.

Im Rahmen der Erfindung wird auch ein Arbeitsplatz zum manuellen Kommissionieren von Produkten in einem Kommissionierbereich, insbesondere von Speise- und Getränkeprodukten in einem Produktionsbereich eines Restaurants, gemäß einem Kommissionierauftrag durch zumindest eine Kommissionierperson angegeben, wobei der Arbeitsplatz aufweist:
- einen Kommissionierbereich, umfassend
- einen oder mehrere Entnahmeplätze für Produkte, wobei die Entnahmeplätze wahlweise vordefiniert für jeweils ein bestimmtes Produkt oder belegungsabhängig für mehrere unterschiedliche Produkte ausgeführt sein können;
- zumindest ein Kommissionierzielgebinde zum Ablegen der jeweils für einen Kommissionierauftrag bestellten Produkte;
- einen Zentralrechner zum Erfassen der Bestelldaten sämtlicher Produkte eines Kommissionierauftrags, zur Zuordnung einer eindeutigen Kommissionierauftragskennung zu den bestellten Produkten des jeweiligen Kommissionierauftrags anhand der Bestelldaten, und zum Verarbeiten und Aktualisieren von internen Informationen eines Kommissionierauftrags;
- eine mit dem Zentralrechner gekoppelte Anzeigeeinheit zum Anzeigen von optischen Informationen;
- zumindest eine Projektionseinheit zum visuellen Markieren der bestellten Produkte durch optische Projektion einer Kommissionierauftragskennung des jeweiligen Kommissionierauftrags;
- zumindest eine Bildaufnahmeeinheit zum maschinellen Identifizieren der bestellten Produkte, gegebenenfalls gemeinsam mit dem Zentralrechner , an einem Entnahmeplatz anhand von Produktdaten oder von Standortdaten und von Bestelldaten des Zentralrechners.

Vorzugsweise wird bei einem erfindungsgemäßen Arbeitsplatz zum manuellen Kommissionieren eine Datenbrille als tragbare Datenverarbeitungseinheit verwendet. Die maschinelle Identifizierung der bestellten Produkte kann vollständig durch die tragbare Datenverarbeitungseinheit, vorzugsweise durch die Datenbrille, welche jede Kommissionierperson am Körper trägt, erfolgen. Ebenso ist es im Rahmen der Erfindung möglich, dass die maschinelle Identifizierung der Produkte verteilt beziehungsweise kombiniert sowohl durch die tragbaren Datenverarbeitungseinheiten, als auch durch den Zentralrechner erfolgt.

Besonders vorteilhaft sind bei einem erfindungsgemäßen Arbeitsplatz zum manuellen Kommissionieren eine Prüfeinheit zur Überprüfung der Bestelldaten der bestellten Produkte sowie eine Anzeigeeinheit zur Anzeige des fertigen Kommissionierauftrags vorgesehen. In dieser Ausführung ist ein erfindungsgemäßer Arbeitsplatz mit einer Prüfeinheit zur Überprüfung eines Kommissionierauftrags ausgestattet. Mögliche Fehler, welche während des Kommissionierens insbesondere von mehreren parallel bearbeiteten Kommissionieraufträgen passieren, werden somit zuverlässig von der Prüfeinheit erkannt. Weiters steht bei einem solchen erfindungsgemäßen Arbeitsplatz auch eine Anzeigeeinheit zur Anzeige des fertigen Kommissionierauftrags zur Verfügung. Somit wird ein Kommissionierauftrag erst dann zur Auslieferung an den Kunden frei gegeben, wenn der Kommissionierauftrag entsprechend überprüft und als fehlerfrei erkannt wurde.

Weitere Einzelheiten, Merkmale und Vorteile der Erfindung ergeben sich aus der nachfolgenden Erläuterung von in den Zeichnungen schematisch dargestellten Ausführungsformen. In den Zeichnungen zeigen:
- Figur 1 in einem Fließbild einen Ablauf einer weiteren Ausführungsform eines erfindungsgemäßen Kommissionierverfahrens unter Einsatz von tragbaren Datenverarbeitungseinheiten;
- Figur 2 eine Detailansicht von vordefinierten Entnahmeplätzen zur Entnahme festgelegter bestellter Produkte;
- Figur 3 eine Detailansicht von belegungsabhängigen Entnahmeplätzen zur Entnahme unterschiedlicher bestellter Produkte;
- Figur 4 eine Weiterbildung eines erfindungsgemäßen Kommissionierverfahrens unter Einsatz einer tragbaren Datenverarbeitungseinheit sowie von Handerkennungseinrichtungen;
- Figur 5 in einem Fließbild einen Ablauf einer ersten Ausführungsform eines erfindungsgemäßen Kommissionierverfahrens unter Einsatz von stationären Projektions- und Bildverarbeitungseinheiten.

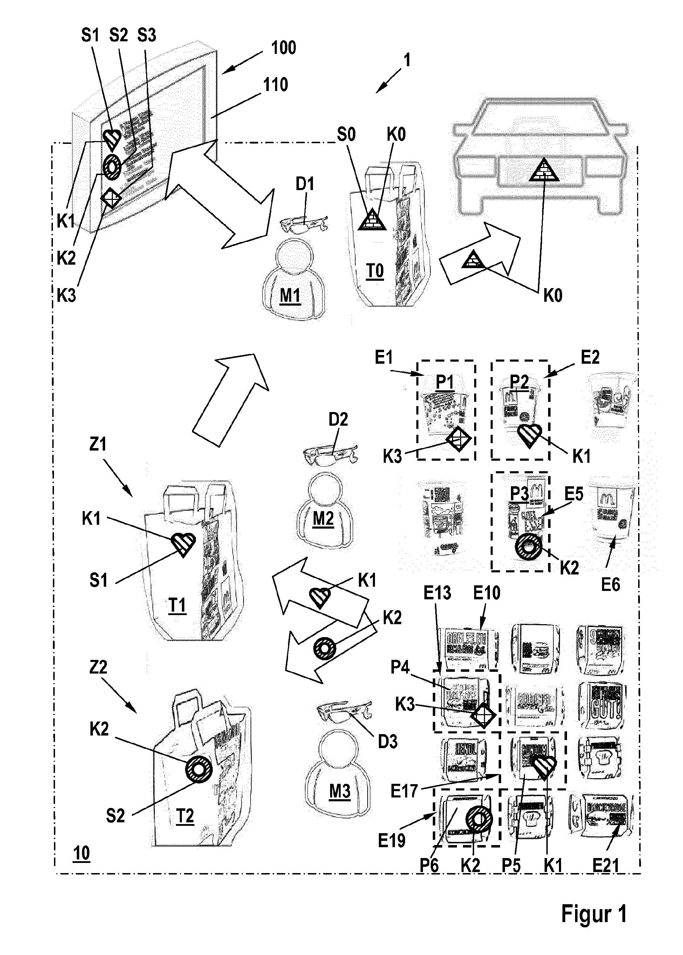

Figur 1 zeigt eine Ausführungsform eines erfindungsgemäßen Kommissionierverfahrens, bei dem tragbare Datenverarbeitungseinheiten D1-D3 eingesetzt werden. Figur 1 veranschaulicht dabei schematisch stark vereinfacht einen Arbeitsplatz zum manuellen Kommissionieren von Produkten P1-P6 in einem Kommissionierbereich 10, insbesondere von Speise- und Getränkeprodukten in einem Produktionsbereich eines Restaurants, gemäß einem Kommissionierauftrag K1-K3 durch zumindest eine Kommissionierperson M1-M3. Der Arbeitsplatz, welcher zum manuellen Kommissionieren ausgerüstet ist, weist dazu einen Kommissionierbereich 10 auf, welcher mehrere Entnahmeplätze E1-E21 für Produkte P1-P6 umfasst, wobei die Entnahmeplätze E10-E21 vordefiniert für jeweils ein bestimmtes Produkt P4-P6 ausgeführt sein können. Alternativ oder in Ergänzung dazu können auch belegungsabhängige Entnahmeplätze E1-E6 für mehrere unterschiedliche Produkte P1-P3 ausgeführt sein. Wie in Figur 1 veranschaulicht sind hier die belegungsabhängigen Entnahmeplätze E1-E6 an einem Getränkeautomaten zum Abfüllen von Getränken beziehungsweise von Produkten P1-P6 vorgesehen. Je nach Kommissionierauftrag K1-K3 können somit beispielsweise an ein und demselben belegungsabhängigen Entnahmeplatz E1 hintereinander gleiche oder unterschiedliche Getränkesorten in Getränkebecher gefüllt werden. Die Zuordnung, welches Getränk zu welchem Kommissionierauftrag gehörig ist, erfolgt anhand von Bestelldaten, welche zu Beginn des Bestellvorgangs von einer Kommissionierperson M1 in einen Zentralrechner 100 eingegeben werden. Die Entnahmeplätze E10-E21 sind hier wahlweise vordefiniert für jeweils ein bestimmtes Produkt P4-P6, beispielsweise für bereits verpackte Speisen.

Weiters sind in Figur 1 mehrere Kommissionierzielgebinde Z1, Z2 zum Ablegen der jeweils für einen Kommissionierauftrag K1-K3 bestellten Produkte P1-P6 vorgesehen. Je nach Anforderung können die Kommissionierzielgebinde Z1, Z2 an bestimmten, vordefinierten Ablageplätzen innerhalb des Kommissionierbereichs 10 während des Kommissioniervorgangs abgestellt werden, um die entsprechenden bestellten Produkte in die Kommissionierzielgebinde Z1, Z2 ablegen zu können. Ebenso ist es im Rahmen des erfindungsgemäßen Kommissionierverfahrens möglich, dass die Kommissionierzielgebinde Z1, Z2 von einer oder von mehreren Kommissionierpersonen M1-M3 während des Kommissioniervorgangs mitgenommen beziehungsweise getragen werden, um auf möglichst kurzem Weg die entsprechenden bestellten Produkte darin ablegen zu können. Als Kommissionierzielgebinde Z1, Z2 werden hier jeweils Tragtaschen T1, T2 verwendet.

Ein Zentralrechner 100 dient zum Erfassen der Bestelldaten sämtlicher Produkte P2, P5 eines Kommissionierauftrags K1. Weiters sind hier bei einem Arbeitsplatz zum Abarbeiten eines erfindungsgemäßen Kommissionierverfahrens 1 mehrere tragbare Datenverarbeitungseinheiten D1-D3 im Einsatz, welche Datenverarbeitungseinheiten D1-D3 jeweils am Körper einer Kommissionierperson M1-M3 getragen werden. Mittels einer Übertragungseinheit werden Bestelldaten eines Kommissionierauftrags K1-K3 vom Zentralrechner 100 an die Datenverarbeitungseinheiten D1-D3 übertragen. Weiters ist eine Einheit zur Zuordnung einer eindeutigen Kommissionierauftragskennung S1-S3 zu den bestellten Produkten P1-P6 des jeweiligen Kommissionierauftrags K1-K3 vorgesehen, wobei die Zuordnung der Kommissionierauftragskennung S1-S3 anhand der Bestelldaten des Zentralrechners 100 erfolgt. Außerdem umfasst ein solcher Arbeitsplatz eine Einheit zum maschinellen Identifizieren der bestellten Produkte P1-P6 an einem Entnahmeplatz E1-E21 durch die Datenverarbeitungseinheit D1-D3 anhand von voreingestellten Produktdaten beziehungsweise von Standortdaten sowie anhand von Bestelldaten des Zentralrechners 100.

Als tragbare Datenverarbeitungseinheiten D1-D3 werden hier jeweils Datenbrillen D1-D3 verwendet. Eine Einheit der tragbaren Datenverarbeitungseinheit D1-D3 dient dabei zum visuellen Markieren der bestellten Produkte P1-P6 durch Überlagerung der Produkte mit der Kommissionierauftragskennung S1-S3 des jeweiligen Kommissionierauftrags K1-K3. Weiters ist eine Einheit zum visuellen Markieren eines dem jeweiligen Kommissionierauftrag K1-K3 zugewiesenen Kommissionierzielgebindes Z1, Z2 vorgesehen. Der hier in Figur 1 veranschaulichte Arbeitsplatz weist außerdem noch eine Prüfeinheit zur Überprüfung der Bestelldaten der bestellten Produkte P1-P6 auf. Weiters ist eine Anzeigeeinheit 110 zur Anzeige der Kommissionieraufträge K1-K3 vorgesehen.

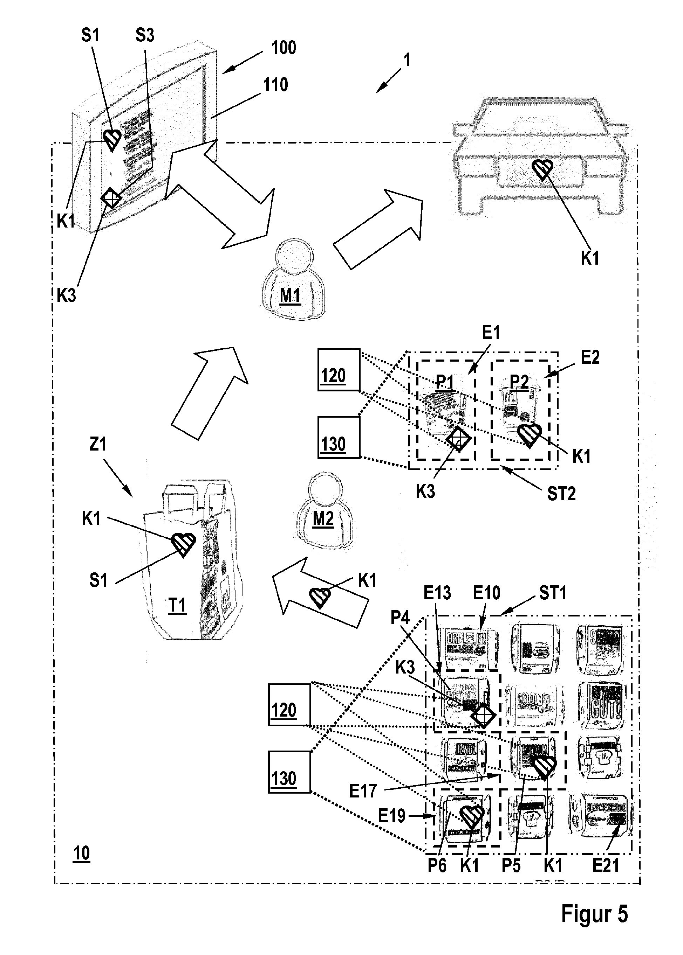

Die tragbaren Datenverarbeitungseinheiten D1-D3 können auch als unterstützende Maßnahme in einer weiteren Ausführungsform eines erfindungsgemäßen Kommissionierverfahrens zum Einsatz kommen. Bei dieser Ausführungsform, die in Figur 5 und der dazugehörigen Figurenbeschreibung erläutert wird, übernehmen stationäre Projektionseinheiten 120 großteils das visuelle Markieren der bestellten Produkte P1-P6. Stationäre Bildverarbeitungseinheiten 130 übernehmen gegebenenfalls gemeinsam mit dem Zentralrechner 100 großteils das maschinelle Identifizieren der bestellten Produkte P1-P6. Die Datenverarbeitungseinheiten D1-D3 gemäß Figur 1 dienen hierbei beispielsweise dazu, dass sie der Kommissionierperson M1-M3 zusätzlich zur Kommissionierauftragskennung S1-S3 weitere Informationen bereitstellen. Dies können Informationen zum jeweils identifizierten bestellten Produkt P1-P6, wie beispielsweise Informationen zu einem Auftragsstatus, Sammeltischstatus, Produktstatus, Zielgebindestatus oder Mitarbeiterstatus, sein. Diese Informationen werden ebenfalls in der Figurenbeschreibung zu Figur 5 näher erläutert. Weiters können die tragbaren Datenverarbeitungseinheiten D1-D3 dazu dienen, den Kommissionierperson M1-M3 in räumlichen Bereichen des Kommissionierbereichs 10, die durch die stationären Projektionseinheiten 120 und Bildverarbeitungseinheiten 130 nicht abgedeckt werden, die entsprechende Kommissionierauftragskennung S 1-S3 oder weitere Informationen zur Verfügung zu stellen.

Nun wird anhand von Figur 1 der Ablauf eines erfindungsgemäßen Kommissionierverfahrens 1 erklärt.

Innerhalb des Kommissionierbereichs 10, beispielsweise eines Produktionsbereichs zur Herstellung beziehungsweise Zubereitung von Speise- und Getränkeprodukten in einem Schnellrestaurant, befinden sich mehrere Kommissionierperson M1, M2, M3, welche jeweils mit einer am Körper tragbaren Datenverarbeitungseinheit D1, D2, D3 ausgestattet sind. Als Datenverarbeitungseinheiten D1-D3 werden hier jeweils Datenbrillen D1-D3 von den Kommissionierpersonen M1-M3 getragen. Von einer Kommissionierperson M1 werden die Bestelldaten sämtlicher bestellter Produkte P2, P5 eines ersten Kommissionierauftrags K1 in einem Zentralrechner 100 erfasst. Sobald die Bestelldaten im Zentralrechner 100 erfasst sind, erfolgt ein Zuordnen einer eindeutigen Kommissionierauftragskennung S1 zu den bestellten Produkten P2, P5 des ersten Kommissionierauftrags K1 anhand der Bestelldaten des Zentralrechners 100. Anschließend werden die Bestelldaten des ersten Kommissionierauftrags K1 vom Zentralrechner 100 an die Datenverarbeitungseinheiten D1-D3 übertragen.
Durch die Datenverarbeitungseinheiten D1-D3 werden die bestellten Produkte P2, P5 des ersten Kommissionierauftrags K1 an einem Entnahmeplatz E2 innerhalb des Kommissionierbereichs 10 anhand von voreingestellten Produktdaten und/oder von Bestelldaten des Zentralrechners 100 maschinell identifiziert. Anschließend erfolgt ein visuelles Markieren der bestellten Produkte P2, P5 des ersten Kommissionierauftrags K1 durch Überlagerung der bestellten Produkte P2, P5 mit der Kommissionierauftragskennung S1 des ersten Kommissionierauftrags K1 durch die Datenverarbeitungseinheit D1-D3.

Parallel dazu werden hier bereits Bestelldaten eines zweiten Kommissionierauftrags K2, welcher die bestellten Produkte P3, P6 umfasst, sowie eines dritten Kommissionierauftrags K3, welcher die bestellten Produkte P1, P4 umfasst, ebenfalls an die Datenverarbeitungseinheiten D1-D3 übermittelt. Die bestellten Produkte P3, P6 des zweiten Kommissionierauftrags K2 werden durch Überlagerung mit der Kommissionierauftragskennung S2 des zweiten Kommissionierauftrags K2 durch die Datenverarbeitungseinheit D1-D3 visuell markiert. Ebenso werden die bestellten Produkte P1, P4 des dritten Kommissionierauftrags K3 durch Überlagerung mit der eindeutigen Kommissionierauftragskennung S3 des dritten Kommissionierauftrags K3 durch die Datenverarbeitungseinheit D1-D3 visuell markiert.

Ein dem ersten Kommissionierauftrag K1 zugewiesenes Kommissionierzielgebinde Z1, in dem die visuell markierten bestellten Produkte P2, P5 von den Kommissionierpersonen M1-M3 abzulegen sind, wird mit der eindeutigen Kommissionierauftragskennung S1 des ersten Kommissionierauftrags K1 durch die Datenverarbeitungseinheiten D1-D3 und/oder durch eine mit dem Zentralrechner 100 gekoppelte Markierungseinheit visuell markiert. Als Kommissionierzielgebinde Z1 wird hier eine Tragtasche T1 verwendet, in welche die bestellten Produkte P2, P5 des ersten Kommissionierauftrags K1 abgelegt werden. Auf der Tragtasche T1 ist hier ebenfalls die eindeutige Kommissionierauftragskennung S1 des ersten Kommissionierauftrags K1 visuell markiert.

Ebenso wird ein dem zweiten Kommissionierauftrag K2 zugewiesenes Kommissionierzielgebinde Z2 innerhalb des Kommissionierbereichs 10 mit der eindeutigen Kommissionierauftragskennung S2 des zweiten Kommissionierauftrags K2 visuell markiert. Die mit derselben eindeutigen Kommissionierauftragskennung S2 visuell markierten bestellten Produkte P3, P6, die dem zweiten Kommissionierauftrag K2 zugeordnet sind, werden von den Kommissionierpersonen M1-M3 in einem Kommissionierzielgebinde Z2 abgelegt. Als Kommissionierzielgebinde Z2 dient hier ebenfalls eine Tragtasche T2, welche von einer oder von mehreren Kommissionierpersonen M1-M3 jeweils beim Einsammeln der bestellten Produkte P3, P6mitgetragen wird. Die visuelle Markierung erfolgt ebenfalls durch die Datenverarbeitungseinheiten D1-D3 und/oder durch eine mit dem Zentralrechner 100 gekoppelte Markierungseinheit.

Eine Markierungseinheit, beispielsweise ein Drucker oder eine Etikettiervorrichtung, mit der die entsprechenden Kommissionierauftragskennungen zum Kennzeichnen der jeweils einem Kommissionierauftrag zugeordneten Kommissionierzielgebinde angefertigt werden, ist der besseren Übersicht wegen in den Abbildungen nicht explizit dargestellt. Als Markierungseinheit können im Rahmen der Erfindung beliebige Drucker und/oder Etikettiervorrichtungen wie beispielsweise Barcode-Drucker verwendet werden. Die Kommissionierauftragskennungen können dazu sowohl direkt auf die Kommissionierzielgebinde, beispielsweise Tragtaschen oder Verpackungsgebinde, aufgedruckt werden. Ebenso können die Kommissionierauftragskennungen mittels entsprechender Etiketten auf die jeweils zugeordneten Kommissionierzielgebinde aufgebracht werden.

Während der Zuteilung der bestellten Produkte zu den jeweiligen Kommissionieraufträgen K1 beziehungsweise K2 werden die Bestellungen im jeweiligen Kommissionierzielgebinde Z1 beziehungsweise Z2 gegebenenfalls nochmals geprüft. Dazu werden beispielsweise im Falle des ersten Kommissionierauftrags K1 die Bestelldaten der bestellten Produkte P2, P5 durch die tragbare Datenverarbeitungseinheit D1 und/oder den Zentralrechner 100 überprüft. Im Falle einer richtigen Zuordnung und Ablage der bestellten Produkte P2, P5 im zugewiesenen Kommissionierzielgebinde Z1 werden erforderlichenfalls die Verfahrensschritte des maschinellen Identifizierens weiterer bestellter Produkte des laufenden Kommissionierauftrags K1, des visuellen Markierens weiterer bestellter Produkte, des visuellen Markierens eines dem jeweiligen Kommissionierauftrag K1 zugewiesenen Kommissionierzielgebindes Z1 sowie des Ablegens der weiteren bestellten Produkte P2, P5 im zugewiesenen Kommissionierzielgebinde Z1 durch eine Kommissionierperson M1-M3 entsprechend wiederholt.

Im Falle einer falschen Zuordnung und/oder einer falschen Ablage eines bestellten Produkts in einem falschen Kommissionierzielgebinde wird eine Fehlermeldung an die Datenverarbeitungseinheiten D1-D3 gesendet und/oder es erfolgt eine visuelle Markierung des falsch zugeordneten Produkts und/oder es erfolgt eine visuelle Markierung des falschen Kommissionierzielgebindes durch die Datenverarbeitungseinheit D1-D3 und/oder durch die mit dem Zentralrechner 100 gekoppelte Anzeigeeinheit 110.

Ebenso ist es im Rahmen der Erfindung möglich, dass eine Überprüfung der Bestellungen nur stichprobenartig erfolgt. Weiters ist es im Rahmen eines erfindungsgemäßen Kommissionierverfahrens möglich, dass ausschließlich eine bestimmte oder auch mehrere bestimmte Kommissionierpersonen, beispielsweise besonders erfahrene Kommissionierpersonen, für die Überprüfung der Bestellungen zuständig ist beziehungsweise sind.

Sobald ein Kommissionierauftrag K1 beziehungsweise K2 abgeschlossen ist, werden die Bestellgebinde beziehungsweise Tragtaschen T1 beziehungsweise T2 an die jeweils in ihren Fahrzeugen wartenden entsprechenden Kunden ausgehändigt. Dies wird hier von der Kommissionierperson M1 durchgeführt.

Wie in Figur 1 dargestellt ist, wird von der Kommissionierperson M1 ein soeben abgeschlossener Kommissionierauftrag K0 an den entsprechenden Kunden ausgehändigt. Dazu ist als Kommissionierzielgebinde Z1 eine Tragtasche T0 mit der Kommissionierauftragskennung S0 des bereits abgeschlossenen Kommissionierauftrags K0 visuell markiert. Die entsprechende visuelle Markierung erfolgt abermals mittels Datenbrille D1, die von der Kommissionierperson M1 getragen wird.

Das erfindungsgemäße Kommissionierverfahren ist keineswegs auf die in Figur 1 dargestellte Konfiguration beschränkt. Es können im Rahmen der Erfindung auch Kommissionierverfahren mit einer Vielzahl an Kommissionierpersonen, Produkten und/oder Kommissionierzielgebinden durchgeführt werden. Ebenso ist es beim erfindungsgemäßen Kommissionierverfahren möglich, Kommissionieraufträge sowohl seriell, als auch parallel abzuarbeiten.

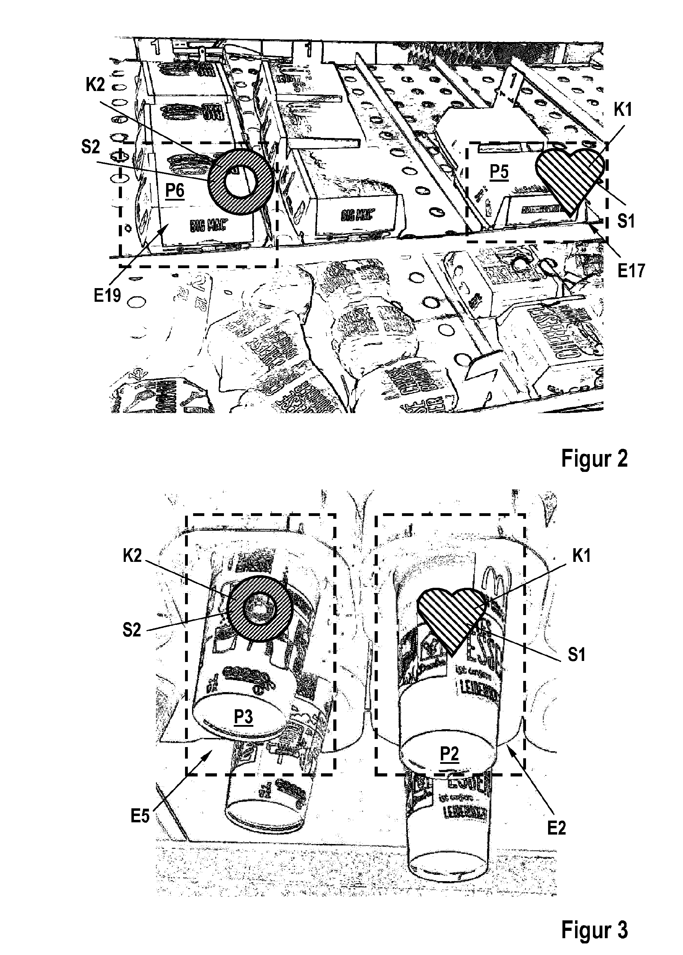

Figur 2 stellt in einer Detailansicht vordefinierte Entnahmeplätze zur Entnahme festgelegter bestellter Produkte innerhalb des Kommissionierbereichs 10 in einem Schnellrestaurant dar. Als Produkte P5, P6 werden hier beispielsweise verpackte Speisen gezeigt, welche sich an vordefinierten Entnahmeplätzen in entsprechenden Schütten beziehungsweise Fächern innerhalb des in Figur 1 veranschaulichten Kommissionierbereichs 10 befinden. Ein bestelltes Produkt P5, welches sich am Entnahmeplatz E 17 befindet, ist einem ersten Kommissionierauftrag K1 zugeordnet. Um das Kommissionieren zu erleichtern, wird dazu von den Datenbrillen D1-D3 jeweils eine eindeutige Kommissionierauftragskennung S1 - hier beispielsweise in Herzform - die dem ersten Kommissionierauftrag K1 zugeordnet ist, auf das verpackte Produkt P5 projiziert. Ebenso wird ein bestelltes Produkt P6, welches sich am Entnahmeplatz E19 befindet, einem zweiten Kommissionierauftrag K2 zugeordnet. Von den Datenbrillen D1-D3 wird jeweils eine eindeutige Kommissionierauftragskennung S2 - hier beispielsweise in Kreisringform - die dem zweiten Kommissionierauftrag K2 zugeordnet ist, auf das verpackte Produkt P6 projiziert.

Figur 3 zeigt eine Detailansicht von belegungsabhängigen Entnahmeplätzen zur Entnahme unterschiedlicher bestellter Produkte. Die belegungsabhängigen Entnahmeplätze befinden sich beispielsweise an einem Getränkeautomaten. Als Produkte P2, P3 werden hier beispielsweise Getränkebecher gezeigt, welche sich an den belegungsabhängigen Entnahmeplätzen E2 beziehungsweise E5 innerhalb des in Figur 1 veranschaulichten Kommissionierbereichs 10 befinden. Vom Zentralrechner 100 wird ein Produkt P2, beispielsweise ein Getränk einer ersten bestimmten Getränkesorte, welche erste Getränkesorte am Entnahmeplatz E2 abgefüllt wird, einem ersten Kommissionierauftrag K1 zugeordnet. Die Bestelldaten beziehungsweise die Belegungsdaten der belegungsabhängigen Entnahmeplätze E2 beziehungsweise E5 werden dazu vom Zentralrechner 100 mittels drahtloser Datenübertragung an die Datenbrillen D1-D3 übertragen. Um das Kommissionieren zu erleichtern, wird von den Datenbrillen D1-D3 jeweils eine eindeutige Kommissionierauftragskennung S1 - hier beispielsweise in Herzform - die dem ersten Kommissionierauftrag K1 zugeordnet ist, auf den Getränkebecher mit dem darin befindlichen Produkt P2 projiziert. Ebenso wird ein Getränkebecher mit einem Produkt P3, beispielsweise ein Getränk einer zweiten bestimmten Getränkesorte, welche zweite Getränkesorte am Entnahmeplatz E5 abgefüllt wird, einem zweiten Kommissionierauftrag K2 zugeordnet. Von den Datenbrillen D1-D3 wird wiederum jeweils eine eindeutige Kommissionierauftragskennung S2 - hier beispielsweise in Kreisringform - die dem zweiten Kommissionierauftrag K2 zugeordnet ist, auf den Getränkebecher mit dem darin befindlichen Produkt P3 projiziert. Somit wird erreicht, dass äußerlich gleiche Getränkebecher, die mit unterschiedlichen Getränken beziehungsweise Produkten befüllt sind, eindeutig und ohne Verwechslungen dem jeweiligen Kommissionierauftrag zugeordnet werden können.

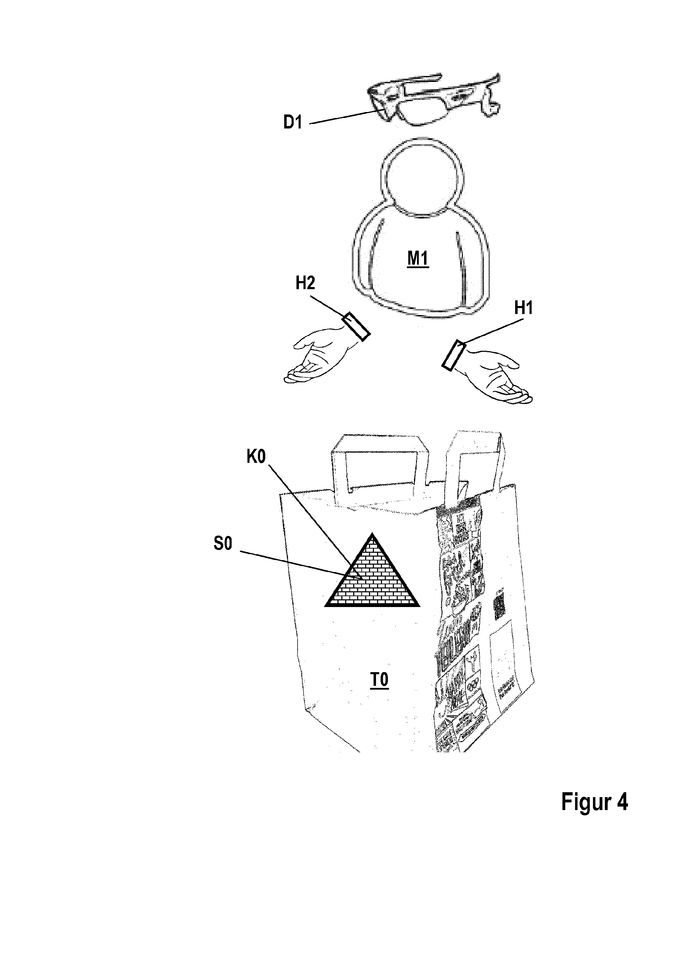

Figur 4 zeigt eine Weiterbildung eines erfindungsgemäßen Kommissionierverfahrens, bei dem sowohl eine tragbare Datenverarbeitungseinheit D1, als auch Handerkennungseinrichtungen H1, H2 eingesetzt werden. Die Handerkennungseinrichtungen H1, H2 sind hier jeweils an den Handgelenken zumindest einer Kommissionierperson M1-M3 befestigt. Beim Ergreifen eines einem Kommissionierauftrag K0 zugeordneten, visuell markierten bestellten Produkts am entsprechenden Entnahmeplatz durch eine Kommissionierperson M1 wird von einer Lageerkennungseinrichtung, welche mit dem Zentralrechner 100 gekoppelt, die Lage der Handerkennungseinrichtungen H1, H2 an den Handgelenken der Kommissionierperson M1 relativ zum Entnahmeplatz des entnommenen Produkts erkannt.

Zusätzlich oder alternativ dazu wird beim Ablegen des von der Kommissionierperson M1 ergriffenen Produkts in dem entsprechend zugewiesenen Kommissionierzielgebinde anhand der Lage der Handerkennungseinrichtungen H1, H2 relativ zum Kommissionierzielgebinde eine Überprüfung des Kommissionierzielgebindes jedes bestellten Produkts ermöglicht. Wie in Figur 4 gezeigt ist, werden hier die ausgewählten beziehungsweise visuell markierten Produkte in ein Kommissionierzielgebinde Z0, beispielsweise eine Tragtasche T0, welche sich hier an einem dem Kommissionierauftrag K0 zugeordneten Ablageplatz befindet, abgelegt. Ebenso können die Kommissionierzielgebinde während des Kommissionierens der bestellten Produkte auch von den Kommissionierpersonen innerhalb des Kommissionierbereichs 10 mitgetragen werden. Es wird somit beim Ablegen der ergriffenen Produkte die Lage der Handerkennungseinrichtungen H1, H2 relativ zum relativ zum Kommissionierzielgebinde Z0, der Tragtasche T0, erkannt.

Die Handerkennungseinrichtungen H1, H2 umfassen ein Sender-/Empfänger-System mit einem mobilen Datenspeicher, welcher mittels einer Funkverbindung berührungslos ausgelesen wird. Somit wird gewährleistet, dass das korrekte Ergreifen von bestellten Produkten am jeweils entsprechenden Entnahmeplatz und/oder das korrekte Ablegen der bestellten Produkte im jeweils zugewiesenen Kommissionierzielgebinde durch die Kommissionierpersonen für jeden Kommissionierauftrag auch anhand der Positionen der Handerkennungseinrichtungen überprüft werden kann.

Im Rahmen der Erfindung ist es auch möglich, dass nur eine Handerkennungseinrichtung H1, welche wahlweise am linken oder am rechten Handgelenk einer Kommissionierperson getragen wird, zur Überwachung der korrekten Entnahme von Produkten an den entsprechenden Entnahmeplätzen und/oder der korrekten Zuordnung von Produkten im entsprechenden Kommissionierzielgebinde dient.

Die Handerkennungseinrichtungen H1, H2 können auch als zusätzliche unterstützende Maßnahme in einer weiteren Ausführungsform eines erfindungsgemäßen Kommissionierverfahrens zum Einsatz kommen. Bei dieser Ausführungsform, die in Figur 5 und der dazugehörigen Figurenbeschreibung erläutert wird, übernehmen stationäre Projektionseinheiten 120 großteils das visuelle Markieren der bestellten Produkte P1-P6. Stationäre Bildverarbeitungseinheiten 130 übernehmen großteils das maschinelle Identifizieren der der bestellten Produkte P1-P6 gegebenenfalls gemeinsam mit dem Zentralrechner. Die Handerkennungseinrichtungen H1, H2 übernehmen hierbei im Wesentlichen dieselben Aufgaben wie zuvor beschrieben.

Figur 5 veranschaulicht schematisch stark vereinfacht den Arbeitsplatz und den Ablauf einer weiteren Ausführungsvariante eines erfindungsgemäßen Kommissionierverfahrens 1. Der Arbeitsplatz weist dazu einen Kommissionierbereich 10 auf. Der Kommissionierbereich 10 weist weiters einen Zentralrechner 100 zum Erfassen der Bestelldaten sämtlicher bestellter Produkte P1, P2, P4, P5, P6 und eine mit dem Zentralrechner 100 gekoppelte Anzeigeeinheit 110 auf. Jeweils zwei Projektionseinheiten 120 und Bildaufnahmeeinheiten 130 sind innerhalb des Kommissionierbereichs 10 ortsfest stationär positioniert. Die Projektionseinheiten 120 und die Bildaufnahmeeinheiten 130 sind dabei unabhängig von einander jeweils direkt mit dem Zentralrechner 100 gekoppelt und werden vom Zentralrechner 100 im Wesentlichen in Echtzeit gesteuert. Die Kopplung kann über zumindest ein Kabel oder kabellos erfolgen. Dabei ist die jeweilige Projektionseinheit 120 vorzugsweise als stationärer Wand- oder Deckenprojektor und die jeweilige Bildaufnahmeeinheit 130 vorzugsweise als stationäre Videokamera ausgeführt. Die Projektionseinheiten 120 und Bildaufnahmeeinheiten 130 können auch nichts ortsfest stationär positioniert, also mobil ausgeführt sein. Hierzu kommen mobile Projektoren und/oder Videokameras zum Einsatz.

Der Kommissionierbereich 10 weist wahlweise vordefinierte Entnahmeplätze E10-E21 für jeweils ein bestimmtes Produkt P4-P6, beispielsweise für bereits verpackte Speisen, auf. Die Entnahmeplätze E10-E21 befinden sich im aktiven Bereich eines Sammeltischs ST1, und alle bestellten Produkte P4-P6 die sich auf diesen Entnahmeplätzen E10-E21 befinden, sind diesem Sammeltischs ST1 zuzuordnen. In Ergänzung dazu sind belegungsabhängige Entnahmeplätze E1-E2 an einem Getränkeautomaten zum Abfüllen von Getränken beziehungsweise von Produkten P1, P2 vorhanden, welche sich im aktiven Bereich eines Sammeltischs ST2 befinden, und alle bestellten Produkte P1, P2 die sich auf diesen Entnahmeplätzen E1-E2 befinden, sind diesem Sammeltischs ST2 zuzuordnen. Der aktive Bereich eines Sammeltisches ST1, ST2 ist im Wesentlichen eine Oberfläche des Sammeltisches ST1, ST2 die von der Bildaufnahmeeinheit 130 optisch im Wesentlichen in Echtzeit erfasst und überwacht wird, um alle bestellten Produkte P1, P2, P4, P5, P6 im Wesentlichen in Echtzeit zu jedem Zeitpunkt maschinell identifizieren zu können. Die Begrenzungen des optischen "Sichtfeldes" der Bildaufnahmeeinheit 130 entsprechen virtuellen Grenzen des Sammeltisches ST1, ST2. Weiters ist ein Kommissionierzielgebinde Z1 zum Ablegen der für den Kommissionierauftrag K1 bestellten Produkte P2, P5, P6 vorgesehen. Als Kommissionierzielgebinde Z1 wird eine Tragtasche T1 verwendet.

Die Bildaufnahmeeinheiten 130 dienen zum maschinellen Identifizieren der bestellten Produkte P1, P2, P4, P5, P6 an einem Entnahmeplatz E1-E21 im Bereich der Sammeltische ST1, ST2 anhand von voreingestellten Produktdaten oder von Standortdaten, beispielsweise eines Entnahmeplatzes E11-E21, sowie anhand der Bestelldaten des Zentralrechners 100. Wird ein bestelltes Produkt P1, P2, P4, P5, P6 von einer Bildaufnahmeeinheit 130 identifiziert, aktualisiert der Zentralrechner 100 die entsprechende interne Information, beispielsweise den Produktstatus des Produktes P1, P2, P4, P5, P6 von "nicht identifiziert" zu "identifiziert", und/oder die optische Information die auf der Anzeigeeinheit 110 dargestellt wird.

Die Projektionseinheiten 120 dienen zum visuellen Markieren der bestellten Produkte P1, P2, P4, P5, P6 durch optische Projektion der Kommissionierauftragskennung S1, S3 des jeweiligen Kommissionierauftrags K1, K3 auf die entsprechend zugehörigen bestellten Produkte P1, P2, P4, P5, P6. Weiters kann eine Einheit zum visuellen Markieren eines dem Kommissionierauftrag K1 zugewiesenen Kommissionierzielgebindes Z1, eine Markierungsvorrichtung, vorgesehen sein.

In einem erfindungsgemäßen Verfahren der vorliegenden Ausführungsform werden von einer Kommissionierperson M1, M2 die Bestelldaten sämtlicher bestellter Produkte P2, P5, P6 eines ersten Kommissionierauftrags K1 im Zentralrechner 100 erfasst. Anschließend erfolgt die Zuordnung der eindeutigen Kommissionierauftragskennung S1 vom Zentralrechner 100 zu diesen Produkten P2, P5, P6 anhand der Bestelldaten des Zentralrechners 100.

Durch die Bildaufnahmeeinheiten 130 werden die bestellten Produkte P2, P5, P6 des ersten Kommissionierauftrags K1 im Bereich ihres zugehörigen Sammeltisches ST1 oder ST2 maschinell identifiziert. Dabei erkennt beispielsweise eine Videokamera mit zugehörigem Bildanalyseprogramm am Zentralrechner 100 anhand von voreingestellten Produktdaten (beispielsweise Aussehen, Form, Farbe, oder Bemusterung der Verpackung, oder Strichcode, QR-Code, Etikett oder andersartige Markierung auf der Verpackung) und der Bestelldaten des Zentralrechners 100 das entsprechende Produkt. Diese internen Informationen werden vom Zentralrechner 100 automatisch und im Wesentlichen in Echtzeit an die entsprechenden Projektionseinheiten 120 übermittelt. Die Projektionseinheiten 120 markieren die jeweiligen bestellten Produkte P2, P5, P6 im Bereich ihres zugehörigen Sammeltisches ST1 oder ST2. Dabei projiziert die Projektionseinheit 120, beispielsweise ein Deckenprojektor, optisch die Kommissionierauftragskennung S1, beispielsweise eine farbige Kontur in Form eines Herzens, eines Sterns, oder eines Kreises, usw., auf eine jeweilige Oberfläche der bestellten Produkte P2, P5, P6. Bei der Oberfläche ist hierbei prinzipiell die Oberfläche der Produktverpackung zu verstehen. Zur besseren Darstellbarkeit und zur besseren Identifizierbarkeit durch die Kommissionierpersonen M1, M2 kann sich die Kommissionierauftragskennung S1 in ihrem optischen Erscheinungsbild zeitlich verändern, beispielsweise um einen Drehpunkt, vorzugsweise ihren Mittelpunkt, drehen.

Parallel dazu werden in Figur 5 bereits Bestelldaten eines zweiten Kommissionierauftrags K3, welcher die bestellten Produkte P1 und P4 umfasst, erfasst. Die bestellten Produkte P1 und P4 des dritten Kommissionierauftrags K3 werden entsprechend mit der Kommissionierauftragskennung S3 des dritten Kommissionierauftrags K3 visuell markiert

Die Projektionseinheit 120 kann neben der Kommissionierauftragskennung S1, S3 zusätzliche Informationen zum jeweils maschinell identifizierten bestellten Produkt P1, P2, P4, P5, P6, wie beispielsweise Informationen zu einem Auftragstatus oder zu einer Priorität des jeweiligen Kommissionierauftrags K1, K3, zu einer Packordnung des bestellten Produkts P1, P2, P4, P5, P6 und/oder zu einer kürzesten Entfernung zum jeweiligen Entnahmeplatz E1-E21 eines bestellten Produkts P1, P2, P4, P5, P6 und/oder zur kürzesten Entfernung zum zugeordneten Kommissionierzielgebinde Z1, Z3 anzeigen.

Mit dem Auftragstatus des jeweiligen Kommissionierauftrags K1 oder Zielgebindestatus des jeweiligen zumindest einen Kommissionierzielgebindes Z1 kann hierbei die Aufzählung, Anzahl und/oder "Vollständigkeit" oder "Nicht-Vollständigkeit" der zum jeweiligen Kommissionierauftrag K1 gehörenden oder im jeweiligen Kommissionierzielgebinde Z1 abgelegten oder eingepackten Produkte P2, P5, P6 gemeint sein. Ein Sammeltischstatus kann die "zeitgleiche Vollständigkeit" oder "zeitgleiche Nicht-Vollständigkeit" aller einem Sammeltisch ST1 zuzuordnenden Produkte P5, P6 eines Kommissionierauftrags K1 auf diesem Sammeltisch ST1 beschreiben. Ein Mitarbeiterstatus kann Auftragstatus und/oder Zielgebindestatus und/oder Sammeltischstatus einer bestimmten Kommissionierperson M1, M2 zuordnen. Ein Produktstatus des Produktes P1, P2, P4, P5, P6 kann beschreiben, ob ein bestelltes Produkt P2, P5, P6 bereits in ein Kommissionierzielgebinde Z1 "eingepackt" oder noch "nicht eingepackt" ist. Der Zentralrechner 100 verarbeitet und aktualisiert entsprechend diese internen Informationen bezüglich Auftragstatus, Zielgebindestatus, Sammeltischstatus, Produktsstatus und Mitarbeiterstatus.

In den Bereich des jeweiligen Sammeltisches ST1 oder ST2 werden die entsprechenden Produkte P1 und P4 oder P2, P5, P6 jeweils von der zugehörigen Bildaufnahmeeinheit 130 und der Projektionseinheit 120 "getrackt", also optisch überwacht. Das bedeutet, dass irgendeine manuelle (durch eine Kommissionierpersonen M1, M2), automatische oder zufällige Verschiebung der Produkte P1, P2, P4, P5, P6, also eine zeitliche Veränderung ihrer räumlichen Position innerhalb des aktiven Bereiches des Sammeltisches ST1, ST2 oder über die virtuellen Grenzen des Sammeltisches ST1, ST2 hinaus, von der jeweiligen Bildaufnahmeeinheit 130 im Wesentlichen in Echtzeit registriert wird und, dass die jeweilige Projektionseinheit 120 die Kommissionierauftragskennung S1, S3 entsprechend im Wesentlichen in Echtzeit nachjustiert. Hierdurch ist jedes identifizierte Produkte P1, P2, P4, P5, P6 zu jedem Zeitpunkt im Bereich seines zugehörigen Sammeltisches ST1, ST2 eindeutig markiert. Wird ein Produkt P1, P2, P4, P5, P6 von der Kommissionierperson M1, M2 aus dem Bereich seines zugehörigen Sammeltisches ST1, ST2 herausbewegt, identifiziert die Bildaufnahmeeinheit 130 diese Änderung der räumlichen Position, der Zentralrechner 100 aktualisiert die entsprechende interne Information, beispielsweise den Produktstatus des Produktes P1, P2, P4, P5, P6 von "nicht eingepackt" zu "eingepackt", und/oder die optische Information, die auf der mit dem Zentralrechner 100 gekoppelten Anzeigeeinheit 110 dargestellt wird.

Die Kommissionierauftragskennung S1, S3 kann in ihrem Erscheinungsbild veränderbar ausgeführt sein. Beispielsweise kann eine farbige Kontur in Form eines Herzens, eines Sterns, oder eines Kreises, usw. in einem 1. Zustand nicht (farbig) ausgefüllt und in einem 2. Zustand farbig ausgefüllt sein. Ist beispielsweise auf einem Sammeltisch ST1 zumindest ein Produkt P5, P6 eines gemeinsamen Kommissionierauftrags K1 vorhanden, jedoch noch nicht alle diesem Sammeltisch ST1 zuzuordnenden Produkte P5, P6, wird dieses Produkt P5, P6 im Bereich des Sammeltisches ST1 von der Projektionseinheit 120 mit der Kommissionierauftragskennung S1 in ihrem 1. Zustand markiert. Sobald jedoch alle dem Sammeltisch ST1 zuzuordnenden Produkte P5, P6 eines gemeinsamen Kommissionierauftrags K1 vorhanden sind, was beispielsweise einem Sammeltischstatus des Kommissionierauftrags K1 der "zeitgleichen Vollständigkeit" entspricht, wird jedes dieser Produkte P5, P6 im Bereich des Sammeltisches ST1 von der Projektionseinheit 120 mit der Kommissionierauftragskennung S1 in ihrem 2. Zustand markiert. Hierdurch erkennt die Kommissionierperson M1, M2, dass der entsprechende Teil des Kommissionierauftrags K1 an diesem Sammeltisch ST1 vollständig ist, und die Kommissionierperson M1, M2 packt die entsprechenden Produkte P5, P6 in das dem ersten Kommissionierauftrag K1 zugewiesene Kommissionierzielgebinde Z1. Danach reicht sie das Kommissionierzielgebinde Z1 an den nächsten Sammeltisch ST2 weiter, oder begibt sich mit dem Kommissionierzielgebinde Z1 zu diesem Sammeltisch ST2. Dieser Vorgang wird entsprechend bei jedem Kommissionierauftrag K1, K3 an allen im Kommissionierbereich 10 vorhandenen Sammeltischen ST1, ST2 wiederholt, bis der entsprechende Kommissionierauftrag K1, K3 vollständig ist.

Mittels der Anwendung heuristischer Methoden kann hierbei vom Zentralrechner 100 festgestellt werden, ob beispielsweise ein Produkt P6, falls dem Kommissionierauftrag K3 ebenfalls zugehörig (was in Figur 5 nicht der Fall ist), diesen vervollständigen würde. Wäre dabei Kommissionierauftrag K3 vor Kommissionierauftrag K1 vollständig, kann der Zentralrechner 100 die Kommissionierauftragskennung S1 von Produkt P6 in Kommissionierauftragskennung S3 ändern, um den Kommissionierauftrag K3 schnellstmöglich abzuschließen. Somit wird eine schnellstmögliche Bearbeitung aller parallel laufenden Kommissionieraufträge verbessert.

Das dem ersten Kommissionierauftrag K1 zugewiesene Kommissionierzielgebinde Z1, in dem die bestellten Produkte P2, P5, P6 von der Kommissionierperson M1, M2 abzulegen sind kann ebenfalls mit der eindeutigen Kommissionierauftragskennung S1 des ersten Kommissionierauftrags K1 durch die Projektionseinheit 120 und/oder durch die mit dem Zentralrechner 100 gekoppelte Markierungseinheit visuell markiert werden. Als Kommissionierzielgebinde Z1 wird beispielsweise eine Tragtasche T1 verwendet.

Während der Zuteilung der bestellten Produkte P1, P2, P4, P5, P6 zu den jeweiligen Kommissionieraufträgen K1, K3 werden Auftragsstatus, Produktstatus, Zielgebindestatus, Sammeltischstatus und Mitarbeiterstatus durch den Zentralrechner 100 zu jedem Zeitpunkt im Wesentlichen in Echtzeit überprüft und die entsprechende interne Information zu jedem Zeitpunkt im Wesentlichen in Echtzeit aktualisiert. Die entsprechenden internen Informationen können über spezifizierte Darstellungen optischer Information, beispielsweise Farbe, Schriftart, Schrifteigenschaft, dynamische Darstellung wie "Blinken", usw., auf der Anzeigeeinheit 110 durch die Kommissionierpersonen M1, M2 unterschieden und ebenfalls überprüft werden. Die optische Information, die auf der Anzeigeeinheit 110 dargestellt wird, wird dabei ebenfalls quasi in Echtzeit vom Zentralrechner 100 aktualisiert, beispielsweise durch das Ändern von Farbe, Schriftart, Schrifteigenschaft, Starten oder Beenden einer dynamischen Darstellung wie beispielsweise "Blinken", usw., sobald sich eine Veränderung der internen Information ergibt. Zusätzlich kann die Kommissionierpersonen M1, M2 die interne Informationen und die optische Information manuell über eine Eingabeeinheit am Zentralrechner 100 oder an der Anzeigeeinheit 110 aktualisieren. Im Falle einer falschen Zuordnung und/oder einer falschen Ablage eines Produkts P1, P2, P4, P5, P6 wird eine Fehlermeldung vom Zentralrechner 100 gesendet und auf der Anzeigeeinheit 110 dargestellt.

Zusätzlich kann durch eine Prüfeinheit eine weitere Überprüfung der Bestelldaten der bestellten Produkte P2, P5, P6 und ein Abgleich der zugehörigen internen Informationen des Zentralrechners 100 durchgeführt werden. Eine solche Prüfeinheit kann beispielsweise eine Waage sein, die ein Gesamtgewicht eines fertig befüllten Kommissionierzielgebindes Z1 mit dem laut Bestelldaten der bestellten Produkte P2, P5, P6 zu erwartenden Gesamtgewicht abgleicht, und so einen Auftragsstatus und/oder Zielgebindestatus auf "Vollständigkeit" oder "Nicht-Vollständigkeit" überprüft.

Sobald die Überprüfung und/oder der Kommissionierauftrag K1 abgeschlossen ist, wird das Kommissionierzielgebindes Z1 von der Kommissionierperson M1, M2 an die entsprechenden Kunden ausgehändigt.

Zusätzlich kann das erfindungsgemäße Verfahren 1 zum manuellen Kommissionieren von Produkten P2, P5, P6 laut der in Figur 5 beschriebenen Ausführungsform, sowie ein zugehöriger Arbeitsplatz, auch entsprechende Weiterbildungen laut den Beschreibungen der Figuren 1 bis 4 aufweisen, bei denen sowohl eine tragbare Datenverarbeitungseinheit D1, als auch Handerkennungseinrichtungen H1, H2 eingesetzt werden können.

Es kann weiters erwähnt werden, dass erfindungsgemäße Verfahren 1, beziehungsweise entsprechend zugehörige Arbeitsplätze, zum manuellen Kommissionieren von Produkten P1-P6 in einem Kommissionierbereich 10, laut dem in den Figuren 1 bis 5 beschriebenen Ausführungsformen, auch im Bereich von Warenhäusern oder des Einzelhandels zum manuellen Kommissionieren von Waren aller Art angewandt werden, beziehungsweise ausgebildet sein, können.

### Liste der Positionszeichen:

- 1: Kommissionierverfahren
- 10: Kommissionierbereich
- 100: Zentralrechner
- 110: Anzeigeeinheit
- 120: Projektionseinheit
- 130: Bildaufnahmeeinheit
- D1: tragbare Datenverarbeitungseinheit (beziehungsweise D2, D3)
- E1: Entnahmeplatz (beziehungsweise E2-E21)
- H1: Handerkennungseinrichtung (beziehungsweise H2)
- K1: Kommissionierauftrag (beziehungsweise K0, K2, K3)
- M1: Kommissionierperson (beziehungsweise M2, M3)
- P1: Produkt (beziehungsweise P2-P6)
- S1: Kommissionierauftragskennung (beziehungsweise S0, S2, S3)
- T1: Tragtasche (beziehungsweise T0, T2)
- Z1: Kommissionierzielgebinde (beziehungsweise Z0, Z2)

## Patentansprüche

1. Verfahren (1) zum manuellen Kommissionieren von Produkten (P1-P6) in einem Kommissionierbereich (10), insbesondere von Speise- und Getränkeprodukten in einem Produktionsbereich eines Restaurants, gemäß einem Kommissionierauftrag (K1, K3), wobei das Verfahren mit einem Zentralrechner (100), zumindest einer mit dem Zentralrechner (100) gekoppelten Projektionseinheit (120), die vorzugsweise als stationärer Wand- oder Deckenprojektor ausgebildet ist, und zumindest einer mit dem Zentralrechner (100) gekoppelten Bildaufnahmeeinheit (130), die vorzugsweise als stationäre Videokamera ausgebildet ist, abgearbeitet wird, umfassend die folgenden Verfahrensschritte:
- a - Erfassen von Bestelldaten sämtlicher bestellter Produkte (P2, P5, P6) eines ersten Kommissionierauftrags (K1) im Zentralrechner (100);
- b - Maschinelles Identifizieren zumindest eines bestellten Produkts (P2, P5, P6) des ersten Kommissionierauftrags (K1) an einem Entnahmeplatz (E2, E17, E19) innerhalb des Kommissionierbereichs (10) durch die Bildaufnahmeeinheit (130), gegebenenfalls gemeinsam mit dem Zentralrechner (100) anhand von Produktdaten und den Bestelldaten des Zentralrechners (100) oder von Standortdaten des Entnahmeplatzes (E2, E17, E19);
- c - Visuelles Markieren zumindest eines bestellten Produkts (P2, P5, P6) durch optische Projektion einer Kommissionierauftragskennung (S1) des ersten Kommissionierauftrags (K1) auf eine Oberfläche des bestellten Produkts (P2, P5, P6) durch die Projektionseinheit (120);
- e - Ablegen oder Einpacken des zumindest einen bestellten Produkts (P2, P5, P6) in zumindest ein Kommissionierzielgebinde (Z1) durch zumindest eine Kommissionierperson (M1, M2);
- f - erforderlichenfalls Wiederholen der Verfahrensschritte - b - bis - e - für weitere bestellte Produkte (P2, P5, P6) des ersten Kommissionierauftrags (K1).

2. Verfahren (1) nach Anspruch 1, **dadurch gekennzeichnet, dass** nach dem Verfahrensschritt - c - in einem Verfahrensschritt - d - das zumindest eine dem ersten Kommissionierauftrag (K1) zugewiesene Kommissionierzielgebinde (Z1), in welches das zumindest eine visuell markierte bestellte Produkt (P2, P5, P6) von der zumindest einen Kommissionierperson (M1, M2) abzulegen ist, mit derselben eindeutigen Kommissionierauftragskennung (S1) des ersten Kommissionierauftrags (K1) durch die Projektionseinheit (120) oder durch eine mit dem Zentralrechner (100) gekoppelte Markierungsvorrichtung oder durch manuelles Anbringen der Kommissionierauftragskennung (S1) durch die zumindest eine Kommissionierperson (M1, M2) visuell markiert wird.

3. Verfahren (1) nach einem der Ansprüche 1 oder 2, **dadurch gekennzeichnet, dass** von der Projektionseinheit (120) oder von einer Datenverarbeitungseinheit (D1-D3) neben der Kommissionierauftragskennung (S1) zumindest eine zusätzliche Information zum jeweils identifizierten bestellten Produkt (P2, P5, P6), wie beispielsweise Informationen zu einem Auftragsstatus, Sammeltischstatus, Produktstatus, Zielgebindestatus oder Mitarbeiterstatus, angezeigt wird.

4. Verfahren (1) nach einem der Ansprüche 1 bis 3, **dadurch gekennzeichnet, dass** die zumindest eine Kommissionierperson (M1, M2) den Verfahrensschritt - e - für alle einem Sammeltisch (ST1) zuzuordnenden bestellten Produkte (P5, P6) mit der Kommissionierauftragskennung (S1) des ersten Kommissionierauftrags (K1) durchführt, nachdem diese Kommissionierauftragskennung (S1) ihr Erscheinungsbild von einem 1. Zustand in einen 2. Zustand geändert hat, wobei die Kommissionierauftragskennung (S1) ihr Erscheinungsbild von einem 1. Zustand in einen 2. Zustand ändert, nachdem sich alle einem Sammeltisch (ST1) zuzuordnenden bestellten Produkte (P5, P6) mit der Kommissionierauftragskennung (S1) des ersten Kommissionierauftrags (K1) zum selben Zeitpunkt im aktiven Bereich des Sammeltisches (ST1) befinden.

5. Verfahren (1) nach Anspruch 4, **dadurch gekennzeichnet, dass** die Bildaufnahmeeinheit (130) und die Projektionseinheit (120) alle dem Sammeltisch (ST1) zuzuordnenden bestellten Produkte (P5, P6) des ersten Kommissionierauftrags (K1) im aktiven Bereich des Sammeltisches (ST1) zu jedem Zeitpunkt im Wesentlichen in Echtzeit maschinell identifizieren und visuell mit der Kommissionierauftragskennung (S1) des ersten Kommissionierauftrags (K1) markieren, wobei eine etwaige Veränderung der räumlichen Position der dem Sammeltisch (ST1) zuzuordnenden bestellten Produkte (P5, P6) innerhalb des aktiven Bereiches des Sammeltisches (ST1) von der Bildaufnahmeeinheit (130) zu jedem Zeitpunkt im Wesentlichen in Echtzeit registriert und die jeweilige Kommissionierauftragskennung (S1) des ersten Kommissionierauftrags (K1) von der Projektionseinheit (120) entsprechend der veränderten räumlichen Position der dem Sammeltisch (ST1) zuzuordnenden bestellten Produkte (P5, P6) im Wesentlichen in Echtzeit nachjustiert wird.

6. Verfahren (1) nach Anspruch 4 oder 5, **dadurch gekennzeichnet, dass** die Bildaufnahmeeinheit (130) eine Veränderung der räumlichen Position der dem Sammeltisch (ST1) zuzuordnenden bestellten Produkte (P5, P6) über die virtuelle Abgrenzung des aktiven Bereiches des Sammeltisches (ST1) hinaus zu jedem Zeitpunkt im Wesentlichen in Echtzeit registriert, wodurch der Zentralrechner (100) einen Produktstatus des dem Sammeltisch (ST1) zuzuordnenden bestellten und vom Sammeltisch (ST1) über die virtuelle Abgrenzung des aktiven Bereiches des Sammeltisches (ST1) hinaus bewegten Produkts (P5, P6), und gegebenenfalls zumindest eine weitere interne Information wie Sammeltischstatus, Auftragsstatus, Zielgebindestatus oder Mitarbeiterstatus, aktualisiert und gegebenenfalls eine entsprechende optische Information auf einer mit dem Zentralrechner (100) gekoppelten Anzeigeeinheit (110) aktualisiert.

7. Verfahren (1) nach Anspruch 6, **dadurch gekennzeichnet, dass** der Zentralrechner (100) die interne Information und danach die optische Information, die an der Anzeigeeinheit (110) dargestellt wird, zu jedem Zeitpunkt im Wesentlichen in Echtzeit aktualisiert, wobei die optische Information zumindest eine der folgenden internen Informationen darstellt:
- Kommissionierauftragskennung (S1)
- Auftragsstatus des Kommissionierauftrags (K1)
- Sammeltischstatus des Sammeltisches (ST1, ST2)
- Produktstatus des bestellten Produkts (P2, P5, P6)
- Zielgebindestatus des Kommissionierzielgebindes (Z1)
- Mitarbeiterstatus der zumindest einen Kommissionierperson (M1, M2)

8. Verfahren (1) nach einem der Ansprüche 4 bis 7 **dadurch gekennzeichnet, dass** der Zentralrechner (100) durch die Anwendung heuristischer Methoden und/oder Regeln die Kommissionierauftragskennung (S1) eines 1. Kommissionierauftrags (K1) in die Kommissionierauftragskennung (S3) eines 2. Kommissionierauftrags (K3), oder umgekehrt, und gegebenenfalls das Erscheinungsbild der Kommissionierauftragskennung (S1, S3) von einem 1. Zustand in einen 2. Zustand, oder umgekehrt, für zumindest ein bestelltes Produkt (P2, P5, P6) aktualisiert.

9. Verfahren (1) nach einem der Ansprüche 6 bis 8, **dadurch gekennzeichnet, dass** zumindest eine der internen Informationen Auftragsstatus, Sammeltischstatus, Produktstatus, Zielgebindestatus oder Mitarbeiterstatus durch den Zentralrechner (100) und gegebenenfalls durch die zumindest eine Kommissionierperson (M1, M2) zu jedem Zeitpunkt überprüft werden, wobei der Zentralrechner (100) im Falle einer fehlenden Übereinstimmung der zumindest einen internen Information mit den Bestelldaten des Zentralrechners (100) die interne Information und die optische Information, die an der Anzeigeeinheit (110) dargestellt wird, aktualisiert und eine Fehlermeldung an die Anzeigeeinheit (110) sendet.

10. Verfahren (1) nach einem der vorhergehenden Ansprüche, **dadurch gekennzeichnet, dass** zum maschinellen Identifizieren eines bestellten Produkts (P4-P6) an einem vordefinierten Entnahmeplatz (E10- E21) Produktdaten wie Form, Farbe, Muster, Strichcode, oder QR-Code einer Produktverpackung verwendet werden und, dass zum maschinellen Identifizieren eines bestellten Produkts (P1-P2) an einem belegungsabhängigen Entnahmeplatz (E1-E2), beispielsweise an einem Getränkeausgabeautomaten, die Produktdaten unterschiedlicher Produkte (P1-P2) anhand der Bestelldaten des Zentralrechners (100) ermittelt werden.

11. Verfahren (1) nach einem der vorhergehenden Ansprüche, **dadurch gekennzeichnet, dass** die für ein bestelltes Produkt (P4-P6) eindeutige Kommissionierauftragskennung (S1, S3) zumindest eines der charakteristischen Kennzeichen Farbe, Form, Kontur, Füllgrad, Strichcode, QR-Code enthält.

12. Verfahren (1) nach einem der vorhergehenden Ansprüche, **dadurch gekennzeichnet, dass** der Zentralrechner (100) über die Projektionseinheit (120) die Kommissionierauftragskennung (S1, S3) eines Produktes (P1-P6) in ihrem optischen Erscheinungsbild zeitlich verändert, beispielsweise durch eine Drehung um einen Drehpunkt, vorzugsweise einen Mittelpunkt, der Kommissionierauftragskennung (S1, S3).

13. Arbeitsplatz zum manuellen Kommissionieren von Produkten (P2, P5, P6) in einem Kommissionierbereich (10), insbesondere von Speise- und Getränkeprodukten in einem Produktionsbereich eines Restaurants, gemäß einem Kommissionierauftrag (K1, K3) durch zumindest eine Kommissionierperson (M1, M2), aufweisend:
- einen Kommissionierbereich (10), umfassend
- mehrere Entnahmeplätze (E1-E21) für Produkte (P1-P6), wobei die Entnahmeplätze (E10-E21) wahlweise vordefiniert für jeweils ein bestimmtes Produkt (P5,P6) oder belegungsabhängig (E1-E2) für mehrere unterschiedliche Produkte (P1-P2) ausgeführt sein können;
- zumindest ein Kommissionierzielgebinde (Z1) zum Ablegen der jeweils für einen Kommissionierauftrag (K1) bestellten Produkte (P1-P6);
- einen Zentralrechner (100) zum Erfassen der Bestelldaten sämtlicher Produkte (P1-P6) eines Kommissionierauftrags (K1, K3), zur Zuordnung einer eindeutigen Kommissionierauftragskennung (S1, S3) zu den bestellten Produkten (P1-P6) des jeweiligen Kommissionierauftrags (K1, K3) anhand der Bestelldaten, und zum Verarbeiten und Aktualisieren von internen Informationen eines Kommissionierauftrags (K1);
- eine mit dem Zentralrechner (100) gekoppelte Anzeigeeinheit (110) zum Anzeigen von optischen Informationen;
- zumindest eine Projektionseinheit (120) zum visuellen Markieren der bestellten Produkte (P1-P6) durch optische Projektion einer Kommissionierauftragskennung (S1, S3) des jeweiligen Kommissionierauftrags (K1, K3);
- zumindest eine Bildaufnahmeeinheit (130) zum maschinellen Identifizieren, gegebenenfalls gemeinsam mit dem Zentralrechner (100), der bestellten Produkte (P1-P6) an einem Entnahmeplatz (E1-E21) anhand von Produktdaten oder von Standortdaten und von Bestelldaten des Zentralrechners (100).

14. Arbeitsplatz nach Anspruch 13, **dadurch gekennzeichnet, dass** eine tragbare Datenverarbeitungseinheit (D1-D3) zum maschinellen Identifizieren zumindest eines bestellten Produkts (P2, P5, P6) des ersten Kommissionierauftrags (K1) an einem Entnahmeplatz (E1-E21) innerhalb des Kommissionierbereichs (10) und/oder zum visuellen Markieren zumindest eines bestellten Produkts (P2, P5, P6) durch Überlagerung des bestellten Produkts (P2, P5, P6) mit der Kommissionierauftragskennung (S1) des ersten Kommissionierauftrags (K1) und/oder zum Anzeigen zumindest einer zusätzlichen Information, wie beispielsweise Informationen zu einem Auftragsstatus, Sammeltischstatus, Produktstatus, Zielgebindestatus oder Mitarbeiterstatus, zu zumindest einem bestellten Produkt (P2, P5, P6) des ersten Kommissionierauftrags (K1) vorgesehen ist.

15. Arbeitsplatz nach einem der Ansprüche 13 oder 14, **dadurch gekennzeichnet, dass** eine Prüfeinheit zur Abgleichung der in ein dem Kommissionierauftrag (K1, K3) zugewiesenes Kommissionierzielgebinde (Z1) abgelegten bestellten Produkte (P2, P5, P6) mit den Bestelldaten dieser Produkte (P2, P5, P6) und gegebenenfalls mit den diesen Produkten (P2, P5, P6) zuzuordnenden internen Informationen, sowie eine Einheit zum visuellen Markieren eines dem jeweiligen Kommissionierauftrag (K1, K3) zugewiesenen Kommissionierzielgebindes (Z1) vorgesehen sind.
